(19) Europäisches Patentamt
European Patent Office
Office européen des brevets

(11) Veröffentlichungsnummer: **0 099 857**
**B1**

(12) **EUROPÄISCHE PATENTSCHRIFT**

(45) Veröffentlichungstag der Patentschrift: **06.08.86**

(51) Int. Cl.⁴: **C 09 B 45/24,** C 09 B 45/48 // C09B33/04, D06P1/10

(21) Anmeldenummer: **83810268.9**

(22) Anmeldetag: **20.06.83**

(54) **Metallkomplexe von Azofarbstoffen.**

(30) Priorität: **24.06.82 CH 3887/82**

(43) Veröffentlichungstag der Anmeldung: **01.02.84 Patentblatt 84/5**

(45) Bekanntmachung des Hinweises auf die Patenterteilung: **06.08.86 Patentblatt 86/32**

(84) Benannte Vertragsstaaten: **CH DE FR GB IT LI**

(56) Entgegenhaltungen:
**EP - A - 0 091 020**
**DE - A - 2 038 473**
**FR - A - 781 862**
**US - A - 2 200 445**
**US - A - 4 120 854**

(73) Patentinhaber: **CIBA-GEIGY AG, Klybeckstrasse 141, CH-4002 Basel (CH)**

(72) Erfinder: **Back, Gerhard, Dr., Hammerstrasse 5, D-7850 Lörrach (DE)**

EP 0 099 857 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der vorliegenden Erfindung sind Metallkomplexfarbstoffe der Formel I

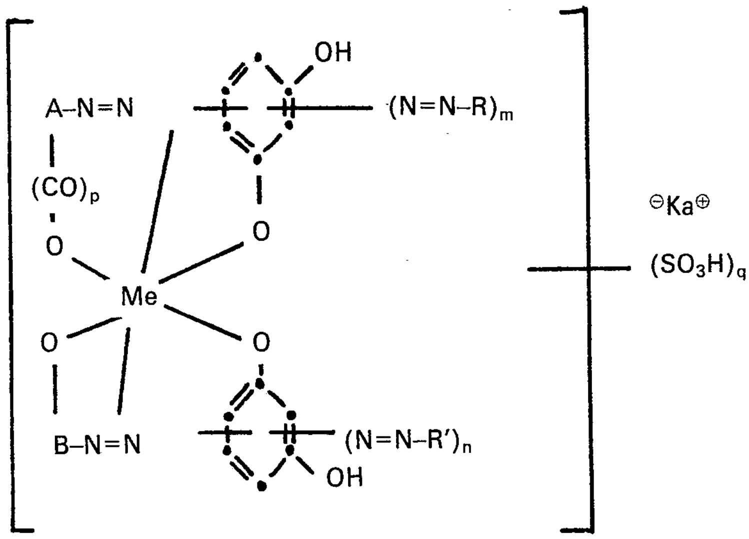

(I),

worin

Me Kobalt oder Chrom

A den Rest einer Diazokomponente der Benzol- oder Naphthalinreihe, welcher die Hydroxy- oder Carboxygruppe in o-Stellung zur Azogruppe trägt,

B den Rest eines o-Aminonaphthols,

R und R′ unabhängig voneinander je einen Benzol- oder Naphthalinrest, der noch weitere Substituenten, jedoch keine Arylaminoreste, keine Sulfogruppen und keine metallisierbaren Gruppen in o-Stellung zur Azogruppe tragen kann,

Ka ein Kation,

p 0 oder 1,

m und n unabhängig voneinander je eine Zahl von 0 bis 1, wobei die Summe n + m eine Zahl von 1 bis 2 ergibt, und

q eine ganze Zahl von 1 bis 6 bedeutet.

In den erfindungsgemässen Metallkomplexfarbstoffen der obigen Formel I können die Reste A, B, R und R′ noch weitere in Farbstoffen übliche Substituenten tragen, z.B. niedermolekulares Alkyl oder Alkoxy, Halogen, wie z.B. Chlor oder Brom, Nitro, Cyano, Sulfo, Carboxy, Phosphono, Alkylsulfonyl, wie z.B. Methylsulfonyl, Sulfamide, wie z.B. Sulfamid oder Sulfomethylamid, oder Acylamino. Unter niedermolekularen Alkyl- oder Alkoxygruppen sind in dieser Anmeldung generell solche mit 1 bis 6, vorzugsweise 1 bis 2 C-Atomen zu verstehen und mit «Acylamino» werden niedrigmolekulare Alkanoylamino-, Alkylsulfonylamino- und Alkoxycarbonylaminoreste sowie Sulfonylamino-, Aroylamino- und Arylsulfonylaminoreste bezeichnet.

Der Rest B leitet sich vorzugsweise von folgenden Aminen ab: 1-Amino -2- hydroxynaphthalin-4- sulfosäure, 1-Amino -2- hydroxy -6- nitronaphthalin -4- sulfosäure, 1-Amino -2- hydroxy-6- chlornaphthalin -4- sulfosäure, 1-Amino-2- hydroxynaphthalin-4,6-disulfosäure oder 1-Hydroxy -2- aminonaphthalin -4- sulfosäure.

Der Rest A kann sich beispielsweise von den vorstehend für den Rest B benannten Aminen ableiten sowie z.B. noch von den folgenden: Anthranilsäure, 4- oder 5-Chloranthranilsäure, 4- oder 5-Sulfoanthranilsäure, 2-Amino -3- naphthoesäure, 2-Amino -1- hydroxybenzol, 4-Chlor- und 4,6-Dichlor -2- amino -1- hydroxybenzol, 4- oder 5-Nitro -2- amino -1- hydroxybenzol, 4-Chlor-, 4-Methyl- und 4-Acetylamino -6- nitro-2- amino -1- hydroxybenzol, 6-Acetylamino- und 6-Chlor -4- nitro -2- amino -1- hydroxybenzol, 4-Cyan -2- amino -1- hydroxybenzol, 4-Sulfonamido -2- amino -1- hydroxybenzol, 1-Hydroxy -2- aminobenzol -4- sulfoanthranilid, 4-Methoxy -2- amino -1- hydroxybenzol, 4-Methoxy -5- chlor -2- amino -1- hydroxybenzol, 4-Methyl -2- amino -1- hydroxybenzol, 4-Chlor-5- nitro -2- amino -1- hydroxybenzol, 3,4,6-Trichlor -2- amino -1- hydroxybenzol, 6-Acetylamino -4- chlor -2- amino -1- hydroxybenzol, 4,6-Dinitro -2- amino -1- hydroxybenzol, 2-Amino -1- hydroxybenzol -4- oder -5- sulfosäure, 4-Nitro -2- amino -1- hydroxybenzol -6- sulfosäure, 5-Nitro- oder 6-Nitro -2- amino -1- hydroxybenzol -4- sulfosäure, 4-Chlor -2- amino-1- hydroxybenzol -6- sulfosäure oder 2-Amino-1- hydroxybenzol-4,6-disulfosäure.

Vorzugsweise ist A der Rest eines 1-Hydroxy-2- aminobenzols, welcher gegebenenfalls ein oder mehrmals durch Halogen, Nitro, Sulfo, Alkyl oder Alkoxy substituiert ist oder der Rest von 1-Amino -2- hydroxynaphthalin -4- sulfosäure, 1-Amino -2- hydroxy -6- nitronaphthalin -4- sulfosäure, 1-Amino -2- hydroxy -6- chlornaphthalin -4- sulfosäure, 1-Amino -2- hydroxynaphthalin-4,6-disulfosäure oder 1-Hydroxy -2- aminonaphthalin -4- sulfosäure.

Statt der oben genannten Amine mit Hydroxygruppe kommen für A und B auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5- sulfosäure, oder tosyliertes 1-Hydroxy -2- aminobenzol, wobei die Methoxy- oder O-Tosylgruppe bei der Metallisierung in eine OH-Gruppe umgewandelt wird. Verbindungen mit diesen Gruppen werden vor allem dann eingesetzt, wenn die entsprechenden 1-Hydroxy -2-amino-verbindungen schlecht kuppeln.

R und R' stellen unabhängig voneinander je einen Benzol- oder Naphthalinrest dar und können die bei Diazokomponenten üblichen Substituenten tragen, jedoch keine Arylaminoreste, keine Sulfogruppen und keine metallisierbaren Gruppen in o-Stellung zur Azogruppe.

Vorzugsweise sind R und R' unabhängig voneinander je ein gegebenenfalls mit Chlor, Brom, Nitro, Sulfamid, N-mono- oder N,N-dialkyliertem Sulfamid, Alkylsulfonyl, Alkyl oder Alkoxy substituierter Phenyl- oder ein Naphthylrest.

Ka⊕ bedeutet vorzugsweise Lithium, Kalium oder vor allem Natrium. Ausserdem kann Ka⊕ ein Ammoniumkation oder das Ammoniumsalz eines organischen Amins sein.

p bedeutet vorzugsweise 0, d.h. die Diazokomponente A trägt in o-Stellung zur Azogruppe eine Hydroxygruppe.

q ist vorzugsweise 2, 3 oder 4 und die Sulfogruppen sind bevorzugt in den Resten A, B, R und R' angeordnet.

Bevorzugte erfindungsgemässe Farbstoffe entsprechen der Formel II

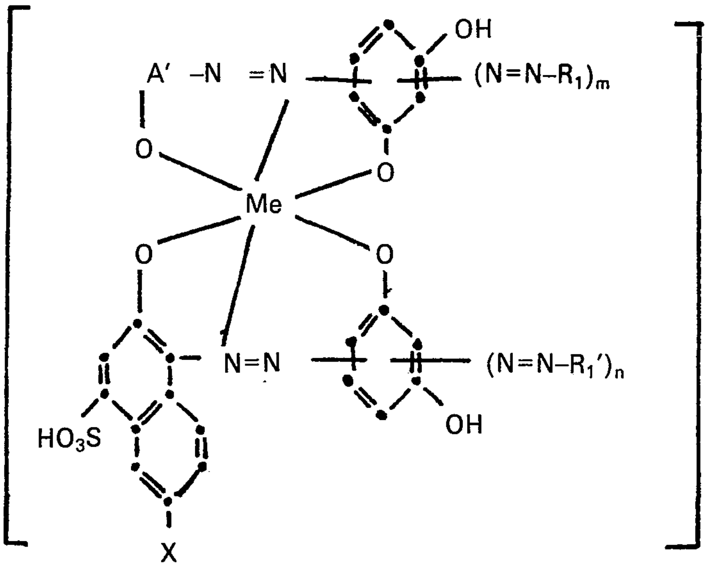

Ka⊕

(II)

worin

A' den Rest einer Diazokomponente der Benzol- oder Naphthalinreihe, welcher die Hydroxygruppe in o-Stellung zur Azogruppe trägt,

$R_1$ und $R_1'$ unabhängig voneinander je einen gegebenenfalls mit Chlor, Brom, Nitro, Sulfamid, N-mono- oder N,N-dialkyliertem Sulfamid, Alkylsulfonyl, Alkyl oder Alkoxy substituierten Phenylrest oder einen Naphthylrest,

X Wasserstoff, Nitro, Chlor oder Sulfo,

m und n unabhängig voneinander je 1 oder 2,

Me Kobalt oder Chrom und

Ka⊕ ein Kation bedeutet, wobei die Farbstoffe insgesamt 2 bis 6 Sulfogruppen aufweisen.

Unter diesen sind diejenigen Farbstoffe der Formel III besonders bevorzugt,

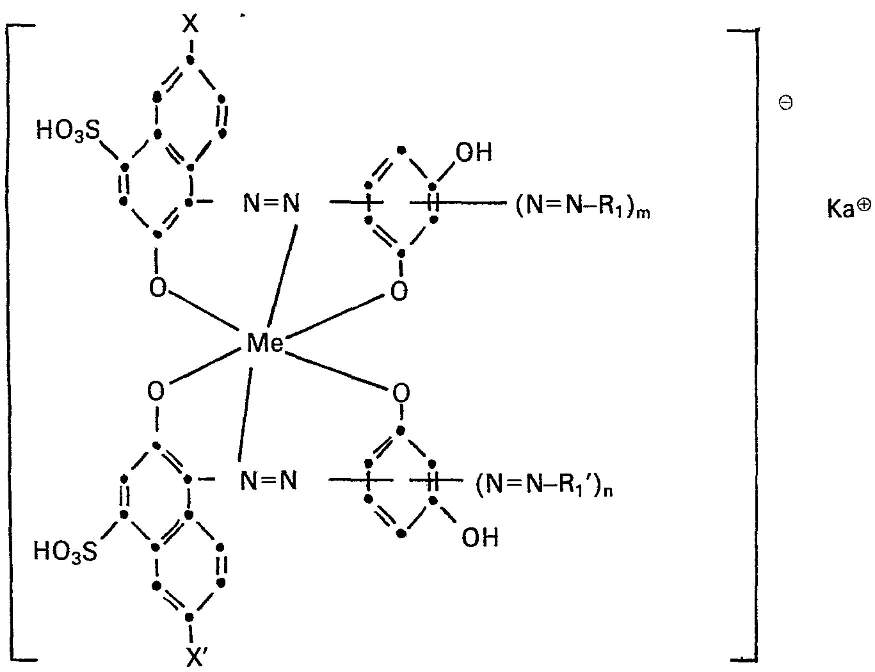

(III)

worin

$R_1$ und $R_1'$ unabhängig voneinander je einen gegebenenfalls mit Chlor, Brom, Nitro, Sulfamid, N-mono- oder N,N-dialkyliertem Sulfamid, Alkylsulfonyl, Alkyl oder Alkoxy substituierten Phenylrest oder einen Naphthylrest,

X und X' unabhängig voneinander Wasserstoff, Nitro, Chlor oder Sulfo,

m und n unabhängig voneinander je 1 oder 2,

Me Kobalt oder Chrom und

$Ka^{\oplus}$ ein Kation bedeutet, wobei die Farbstoffe insgesamt 2 bis 4 Sulfogruppen aufweisen.

Unter diesen sind diejenigen zum Färben von Leder besonders geeignet, bei denen Me Chrom bedeutet.

$R_1$ und $R_1'$ stellen vorzugsweise je einen gegebenenfalls ein- oder zweimal durch Chlor, $C_1$–$C_4$-Alkyl oder $C_1$–$C_4$-Alkoxy substituierten Phenylrest oder einen Naphthylrest dar.

Die erfindungsgemässen Farbstoffe können nach an sich bekannten Methoden hergestellt werden, beispielsweise indem man einen Farbstoff der Formel

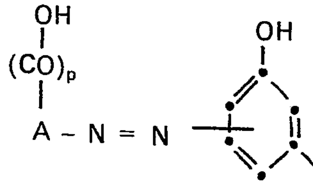

(IV)

und einen Farbstoff der Formel V

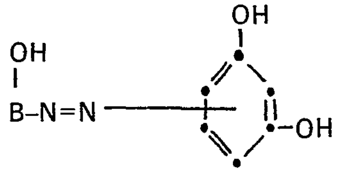

(V)

wobei die Farbstoffe IV und V identisch sein können, mit einem kobalt- oder chromabgebenden Mittel zum 1:2 Metallkomplex umsetzt, wobei man entweder vorgängig den Farbstoff der Formel IV und/oder den Farbstoff der Formel V oder anschliessend den gebildeten 1:2-Komplex mit einer Diazoniumverbindung der Formel VI

$$Y^{\ominus}N \equiv N^{\oplus}\text{–}R \text{ bzw. } Y^{\ominus}N \equiv N^{\oplus}\text{–}R'$$

kuppelt. A, B, R, R' und p weisen die unter der Formel I angegebene Bedeutung auf und $Y^{\ominus}$ bedeutet ein Anion, beispielsweise Chlorid.

Es ist auch möglich, Gemische von 2 oder mehreren der definierten Diazoniumverbindungen einzusetzen.

Falls bei dem obigen Verfahren die Farbstoffe IV und V verschieden sind, so bilden sich Gemische von 1:2 Metallkomplexen, die neben symmetrischen Komplexen, enthaltend 2 Moleküle Farbstoff der Formel IV bzw. V, auch asymmetrische Komplexe, enthaltend je ein Molekül des Farbstoffes der Formel IV und V, aufweisen.

Die 1:2-Chromkomplexe kann man auch herstellen, indem man den 1:1-Chromkomplex eines Farbstoffes der Formel IV oder eines Farbstoffes der Formel V herstellt, diesen dann mit einem nicht metallisierten Farbstoff der Formel V bzw. IV zum 1:2-Chromkomplex umsetzt, wobei man entweder vorgängig den Farbstoff der Formel IV oder V oder den 1:1-Komplex eines dieser Farbstoffe mit ca. einem Mol oder anschliessend den gebildeten 1:2-Komplex mit ca. zwei Mol einer Diazoniumverbindung der Formel VI kuppelt. Auf diese Weise sind auch einheitlich asymmetrische 1:2-Chromkomplexe zugänglich.

Vorzugsweise stellt man zunächst den 1:2 Metallkomplex der Farbstoffe IV und/oder V her und

kuppelt diesen dann mit der Diazoniumverbindung der Formel VI.

Die Kupplungsreaktion, die Kobaltierung und die Chromierung werden nach den üblichen Methoden durchgeführt.

Die nach den obigen Verfahren erhältlichen neuen Metallkomplexfarbstoffe werden vorteilhaft in Form ihrer Salze, insbesondere Alkali-, wie Lithium-, Kalium-, vor allem aber Natriumsalze, oder auch Ammoniumsalze isoliert. Sie eignen sich zum Färben der verschiedensten natürlichen oder synthetischen Stickstoff- und Hydroxygruppen enthaltenden Materialien wie Polyamiden oder Polyurethanen, insbesondere aber zum Färben von Wolle oder vor allem Leder.

Die Metallkomplexfarbstoffe der Formel I, welche nur 2 Sulfogruppen besitzen, werden gegebenenfalls auch als Aminsalze isoliert. Diese eignen sich z.B. zum Aufsprühen auf Leder sowie zum Färben von organischen Flüssigkeiten, Lakken und Polymeren.

Die neuen Farbstoffe sind farbstark und decken gut. Sie haben ein gutes Ziehvermögen, gute Säure- und Alkalistabilität bei gleichzeitig guten Echtheiten, wie Wasch-, Wasser-, Schweiss-, Reib-, Diffusions-, Licht-, Säure- und Alkaliechtheit. Besonders Erwähnung verdient das gute Aufbauvermögen auf diversen Ledersorten, sowohl auf nur mit Chromsalzen gegerbtem Leder wie auch auf mit vegetabilen oder synthetischen Gerbstoffen nachgegerbtem Leder. Man erhält kräftige braune, graue und schwarzeNuancen.

In den nachfolgenden Beispielen bedeuten die Teile, sofern nichts anderes angegeben wird, Gewichtsteile und die Prozente Gewichtsprozente. Die Temperaturen sind in Grad Celsius angegeben.

In den Beispielen sind die Azobindungen zum Resorcin in den Fällen fixiert gezeichnet, wo sich die Verbindungsstelle für das Hauptprodukt nach dem heutigen Stand der Kenntnisse mit einiger Sicherheit angeben lässt. Durch die angegebenen Formeln sollen jedoch auch die entsprechenden Stellungsisomeren, welche in mehr oder weniger grossem Anteil entstehen, mit umfasst sein.

Beispiel 1

40,5 Teile des nach bekanntem Verfahren erhältlichen Monoazofarbstoffs aus 1-Diazo -2-hydroxy -6- nitronaphthalin -4- sulfonsäure und 1,3-Dihydroxybenzol werden in 500 Teilen Wasser von 70° suspendiert und mit soviel 2-normaler Natriumhydroxidlösung versetzt, dass sich ein pH-Wert von 7,5–8,0 einstellt. Nach Zugabe von 125 Teilen einer 3,07 Gew.-% $Cr_2O_3$ enthaltenden Lösung von Natrium-disalicylatochromiat-III wird das Reaktionsgemisch zum Sieden erhitzt und dann so lange unter Rückfluss gerührt, bis der metallfreie Ausgangsfarbstoff nicht mehr nachweisbar ist. Die erhaltene, klare rotviolette Lösung des 1:2-Chromkomplexes wird auf 10–15° gekühlt und unter weiterem Kühlen im Eisbad langsam mit der in üblicher Weise aus 12,75 Teilen 4-Chlor -1- aminobenzol hergestellten Lösung des entsprechenden Diazoniumchlorids versetzt, wobei durch gleichzeitiges Zutropfen einer 4-normalen Lösung von Natriumcarbonat ein pH-Bereich von 8–9 eingehalten wird.

Der neue Metallkomplexfarbstoff der folgenden Konstitution

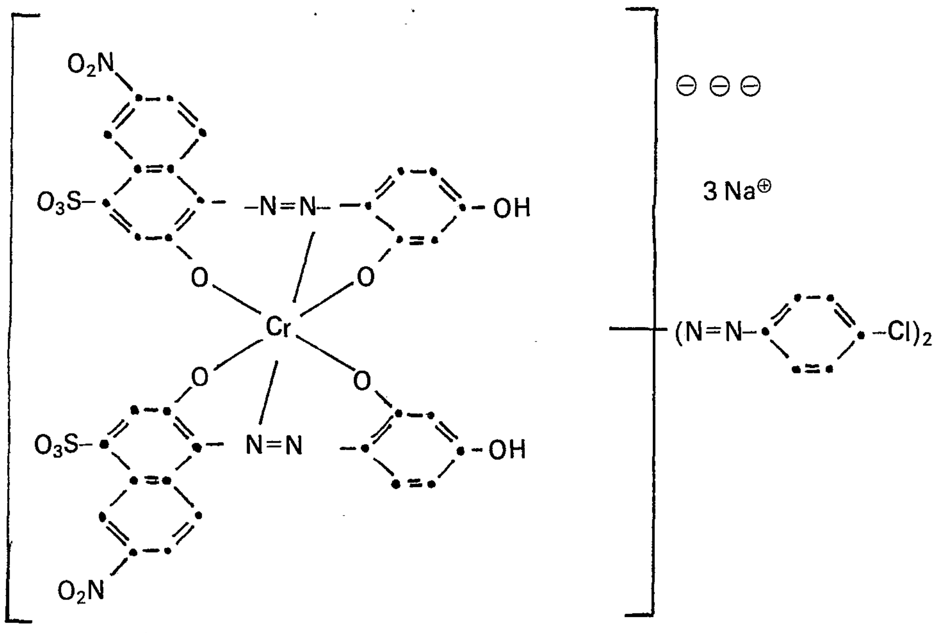

fällt im Verlauf der Kupplungsreaktion vollständig aus; er wird durch Filtration isoliert, mit verdünnter Natriumchloridlösung gewaschen und anschliessend im Vakuum bei 80° getrocknet. Nach Mahlen liegt der Farbstoff als gut wasserlösliches, schwarzes Pulver vor, mit welchem sich Chromleder und nachgegerbtes Leder in sehr gut deckenden, echten, braunstichigen Schwarznuancen färben lässt.

Erfolgt die Metallisierung des genannten Monoazofarbstoffs statt mit Natriumdisalicylatochromiat mit 14,1 Teilen Kobalt-II-sulfat-heptahydrat bei 70 bis 80° und pH 8 bis 9, so führt die nachfolgende Kupplung mit diazotiertem 4-Chlor-1-aminobenzol zu einem ähnlichen Farbstoff von braunvioletter Nuance.

Die nachfolgende Tabelle enthält weitere Farbstoffe, die nach dem beschriebenen Verfahren zugänglich sind. In Kolonne I sind die verwendeten Monoazofarbstoffe aus 1,3-Dihydroxybenzol, in Kolonne II das zur Komplexbildung eingesetzte Metall, in Kolonne III die Diazokomponente, in Kolonne IV deren eingesetzte Menge (in Mol pro 1 Mol Monoazofarbstoff) und in Kolonne V schliesslich die mit den neuen Farbstoffen erzielbaren Nuancen auf Leder angegeben.

| | I | II | III | IV | V |
|---|---|---|---|---|---|
| Nr. | Monoazofarbstoff | Metall | Diazokomponente | Mol Diazo | Nuance |
| 1 | 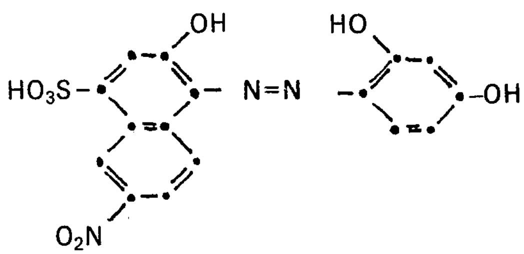 | Chrom | 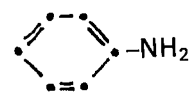 | 1 | rotstichig-schwarz |
| 2 | 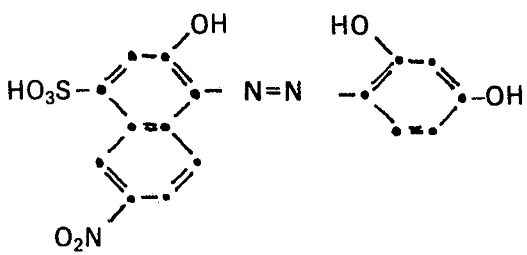 | Chrom | 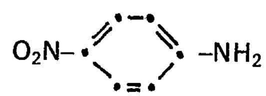 | 1 | braun-schwarz |
| 3 | 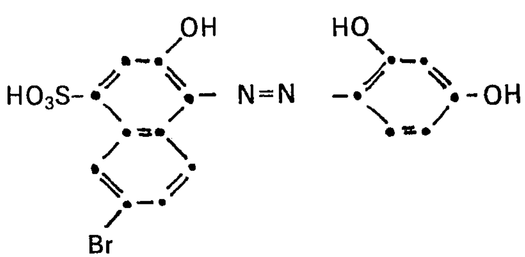 | Chrom | 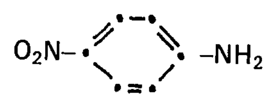 | 1 | braun-schwarz |

| Nr. | I Monoazofarbstoff | II Metall | III Diazokomponente | IV Mol Diazo | V Nuance |
|---|---|---|---|---|---|
| 4 | 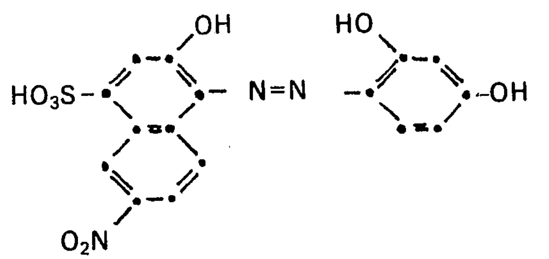 | Chrom | 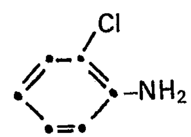 | 1 | violett-schwarz |
| 5 | 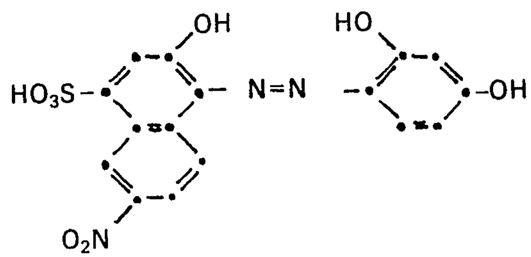 | Chrom | 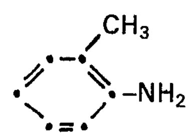 | 1 | braun-schwarz |
| 6 | 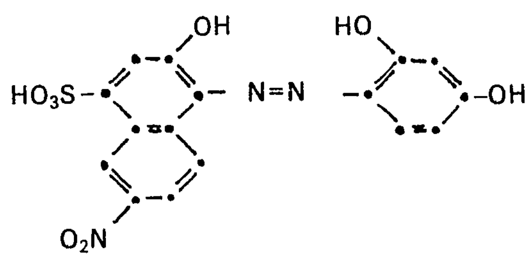 | Kobalt | 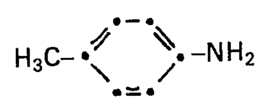 | 1 | braun-violett |

| Nr. | I<br>Monoazofarbstoff | II<br>Metall | III<br>Diazokomponente | IV<br>Mol Diazo | V<br>Nuance |
|---|---|---|---|---|---|
| 7 | 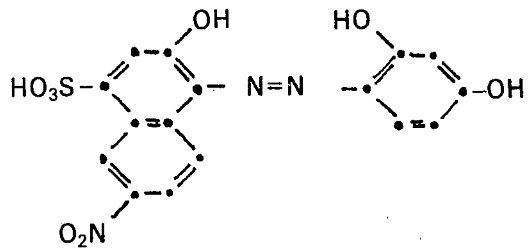 | Chrom | 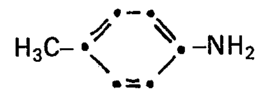 | 1 | braun-violett |
| 8 | 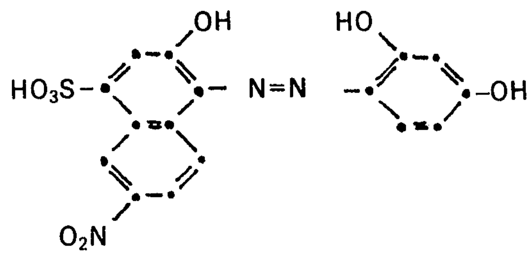 | Chrom | 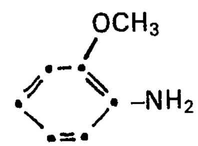 | 1 | violett-braun |
| 9 | 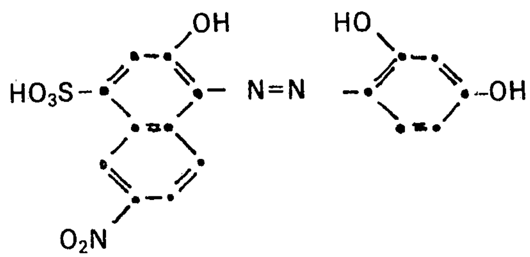 | Chrom | 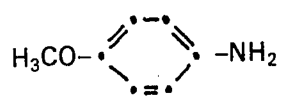 | 1 | violett-braun |

| Nr. | I<br>Monoazofarbstoff | II<br>Metall | III<br>Diazokomponente | IV<br>Mol Diazo | V<br>Nuance |
|---|---|---|---|---|---|
| 10 | 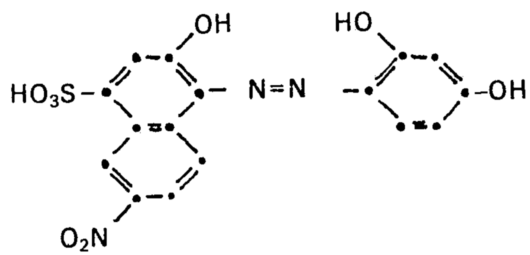 | Chrom | 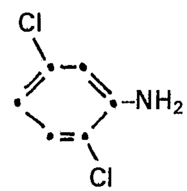 | 1 | braunstichig schwarz |
| 11 | 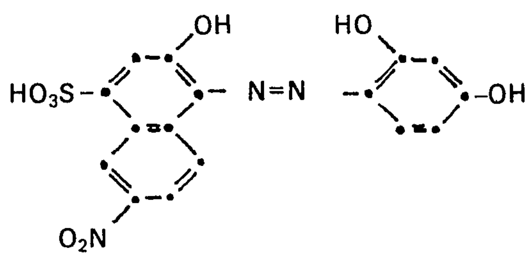 | Chrom | 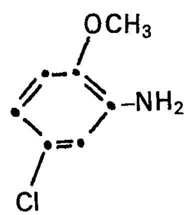 | 1 | rotstichig-schwarz |
| 12 | 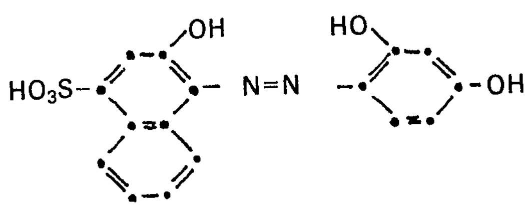 | Chrom | 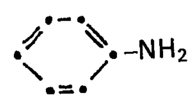 | 1 | violett-schwarz |

| Nr. | I<br>Monoazofarbstoff | II<br>Metall | III<br>Diazokomponente | IV<br>Mol Diazo | V<br>Nuance |
|---|---|---|---|---|---|
| 13 | 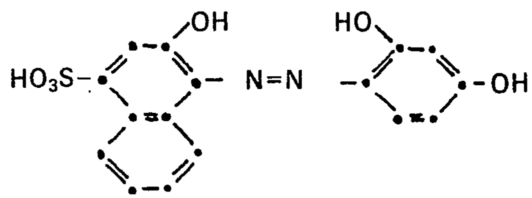 | Chrom | 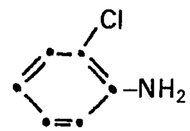 | 1 | rotstichig-schwarz |
| 14 | 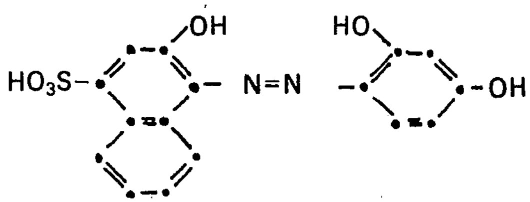 | Kobalt | 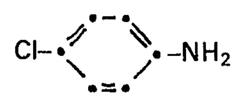 | 1 | violett-schwarz |
| 15 | 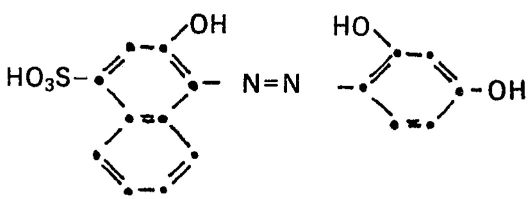 | Chrom | 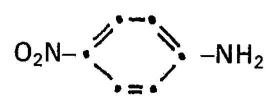 | 1 | dunkelbraun |

| Nr. | I<br>Monoazofarbstoff | II<br>Metall | III<br>Diazokomponente | IV<br>Mol Diazo | V<br>Nuance |
|---|---|---|---|---|---|
| 16 | 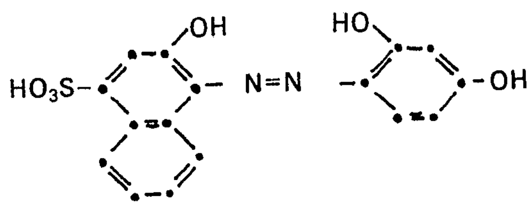 | Chrom | 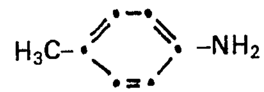 | 1 | dunkelbraun |
| 17 | 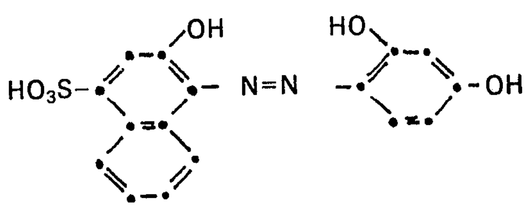 | Chrom | 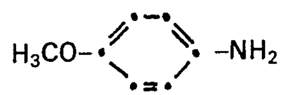 | 1 | rotstichig dunkelbraun |
| 18 | 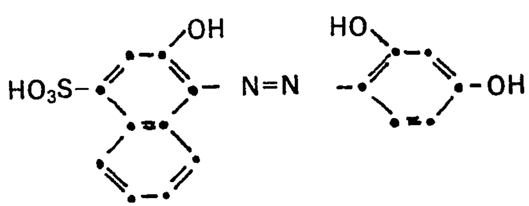 | Chrom | 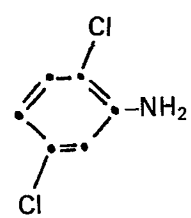 | 1 | braunschwarz |

| Nr. | I Monoazofarbstoff | II Metall | III Diazokomponente | IV Mol Diazo | V Nuance |
|---|---|---|---|---|---|
| 19 | 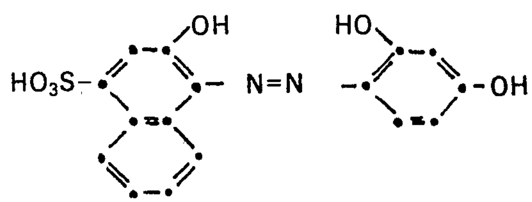 | Chrom | 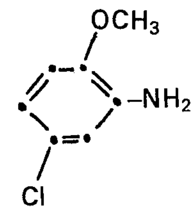 | 1 | violett-schwarz |
| 20 | 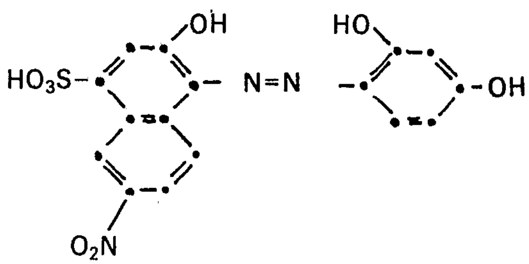 | Kobalt | 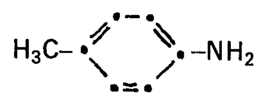 | 1 | braun-violett |
| 21 | 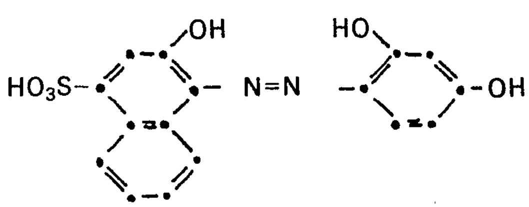 | Kobalt | 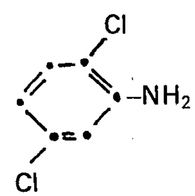 | 1 | dunkel-braun |

| Nr. | I Monoazofarbstoff | II Metall | III Diazokomponente | IV Mol Diazo | V Nuance |
|---|---|---|---|---|---|
| 22 | 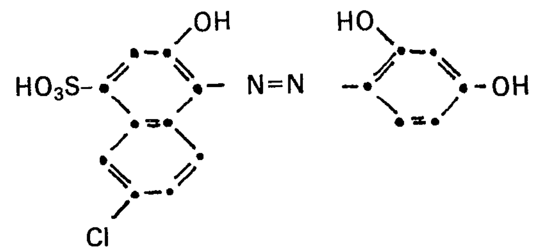 | Chrom | 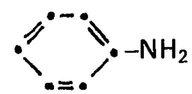 | 1 | braun-schwarz |
| 23 | 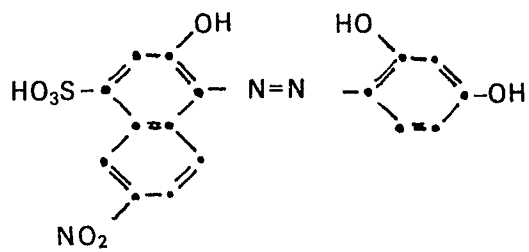 | Chrom | 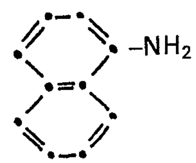 | 1 | violett-schwarz |
| 24 | 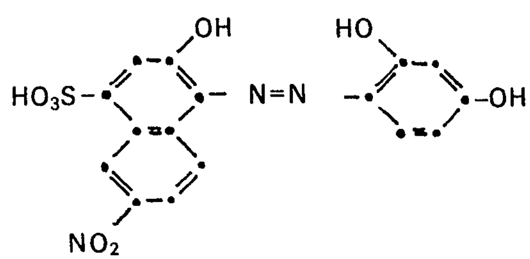 | Kobalt | 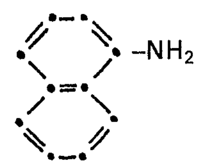 | 1 | dunkel-braun |

Beispiel 2

40,5 Teile des nach bekanntem Verfahren erhältlichen Monoazofarbstoffs aus 1-Diazo -2-hydroxy -6- nitronaphthalin -4- sulfonsäure und 1,3-Dihydroxybenzol werden mit 500 Teilen Wasser von 60° angeschlämmt. Die Suspension wird mit 30 Teilen 2-normaler Schwefelsäure auf pH 2 angesäuert, mit 22 Teilen basischem Chrom-III-sulfat versetzt, zum Sieden erhitzt und anschliessend so lange unter Rückfluss gerührt, bis der metallfreie Ausgangsfarbstoff nicht mehr nachweisbar ist.

Nach Abkühlen auf ca. 50° wird der auskristallisierte, rotviolette 1:1-Chromkomplex des Monoazofarbstoffs durch Filtration isoliert und mit verdünnter Natriumchloridlösung säurefrei gewaschen.

Die Filterpaste des 1:1-Chromkomplexes wird in 500 Teilen Wasser von 70° suspendiert und mit 36,0 Teilen des bekannten Monoazofarbstoffs aus 1-Diazo -2- hydroxynaphthalin -4- sulfonsäure und 1,3-Dihydroxybenzol versetzt. Das Reaktionsgemisch wird mittels 2-normaler Natriumhydroxidlösung auf einen pH-Wert von 7,0–7,5 gestellt und anschliessend bei einer Temperatur von 90–95° bei diesem pH-Wert gehalten und gerührt, bis beide Ausgangsfarbstoffe nicht mehr nachweisbar sind.

Die erhaltene, rotviolette Lösung des einheitlich-asymmetrischen Chromkomplexes wird auf ca. 10–15° gekühlt und nach und nach mit der in üblicher Weise aus 18,6 Teilen Aminobenzol bereiteten Lösung von Benzoldiazoniumchlorid versetzt, wobei durch gleichzeitiges Zutropfen von 2-normaler Natriumhydroxidlösung ein pH-Bereich von 8–9 eingehalten wird. Der neue Farbstoff von folgender Konstitution

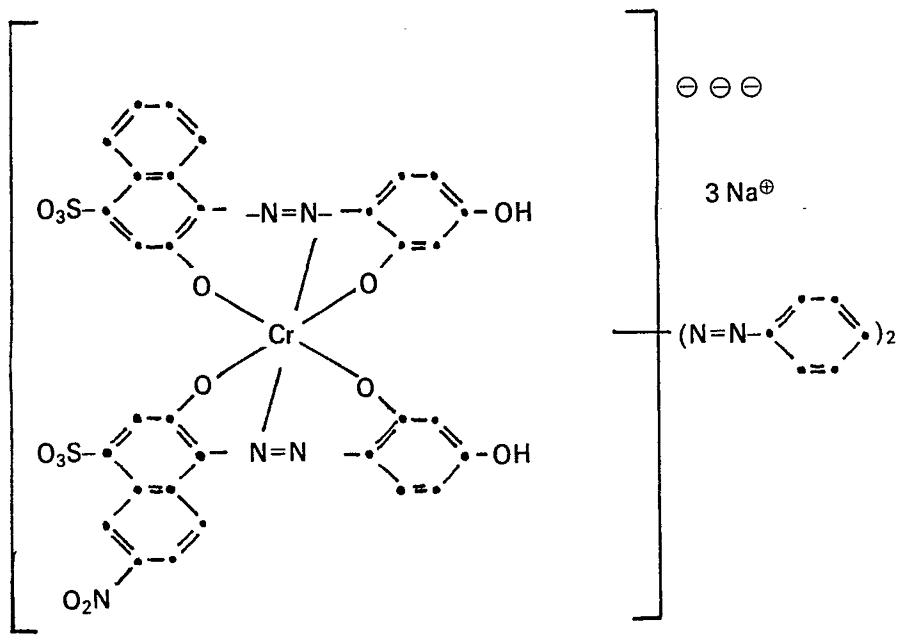

wird aus dem Kupplungsgemisch durch Zugabe von Natriumchlorid abgeschieden, durch Filtration isoliert und, wie im Beispiel 1 angegeben, aufgearbeitet. Auf Chromleder und nachgegerbtem Leder lassen sich damit gut deckende, echte Braunviolettnuancen erzielen.

In der nachfolgenden Tabelle sind weitere, einheitlich asymmetrische Chromkomplexe angeführt, die gemäss dem obigen Beispiel aus den Monoazofarbstoffen der Kolonnen I und II erhältlich sind, wobei jeweils einer der beiden Farbstoffe aus beiden Kolonnen als 1:1-Chromkomplex eingesetzt wird. Kolonne III gibt die zur Kupplung verwendeten Diazokomponenten an, Kolonne IV das molare Verhältnis der eingesetzten Diazokomponenten zum verwendeten Mischkomplex. In Kolonne V sind die auf Leder erzielbaren Farbtöne angegeben.

| Nr. | I<br>Monoazofarbstoff 1 | II<br>Monoazofarbstoff 2 | III<br>Diazo-komponente | IV<br>Mol Diazokom-ponente | V<br>Nuance |
|---|---|---|---|---|---|
| 1 | 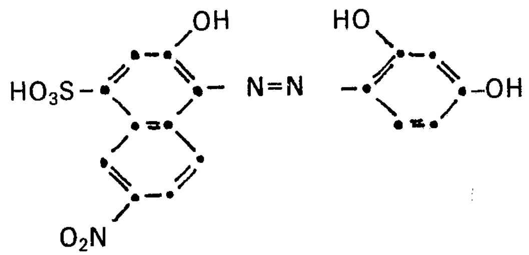 | 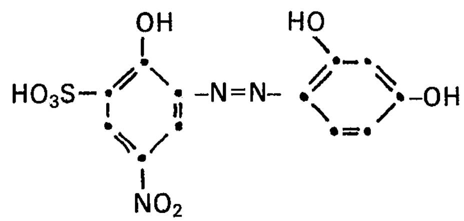 | 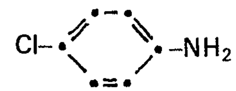 | 2 | dunkelbraun |
| 2 | 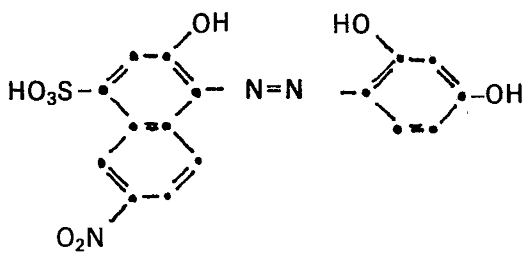 | 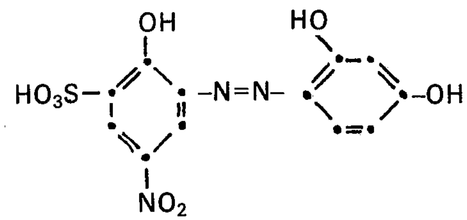 | 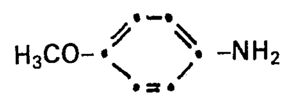 | 2 | violettbraun |
| 3 | 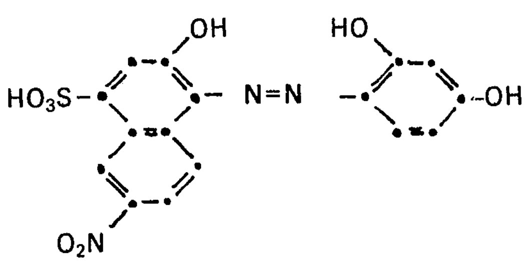 | 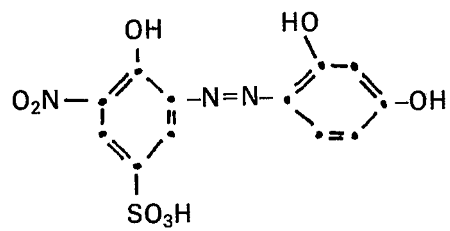 | 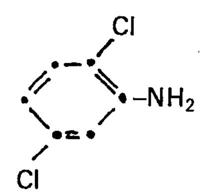 | 2 | dunkelbraun |

| Nr. | I<br>Monoazofarbstoff 1 | II<br>Monoazofarbstoff 2 | III<br>Diazo-komponente | IV<br>Mol Diazokom-ponente | V<br>Nuance |
|---|---|---|---|---|---|
| 4 | 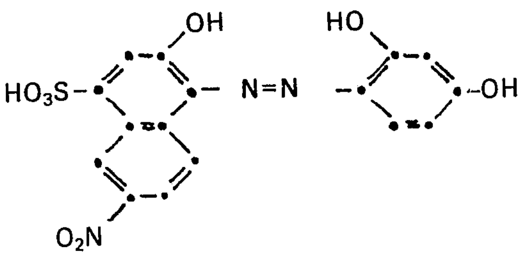 | 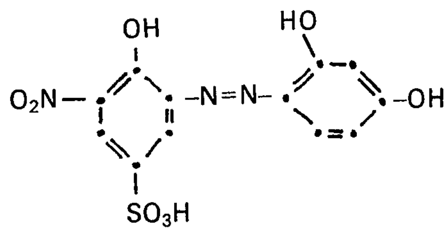 | 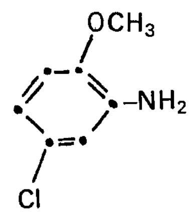 | 2 | violettbraun |
| 5 | 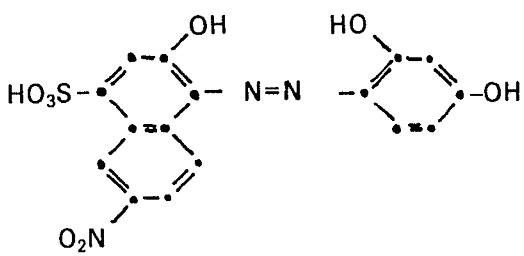 | 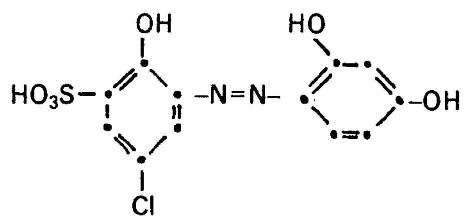 | 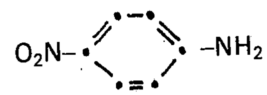 | 2 | dunkelbraun |
| 6 | 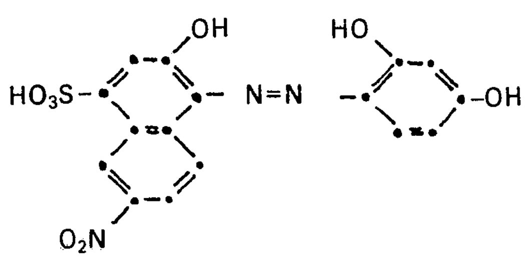 | 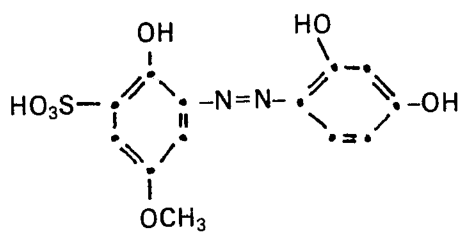 | 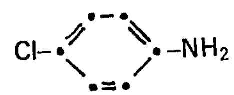 | 2 | dunkelbraun |

| Nr. | I Monoazofarbstoff 1 | II Monoazofarbstoff 2 | III Diazo-komponente | IV Mol Diazokom-ponente | V Nuance |
|---|---|---|---|---|---|
| 7 | 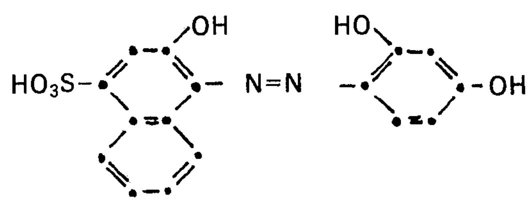 | 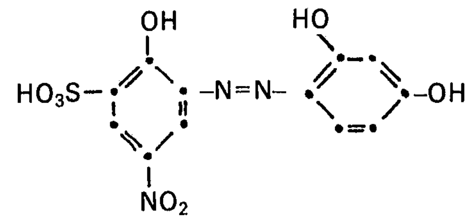 | 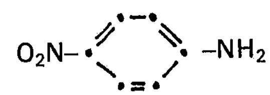 | 2 | dunkelbraun |
| 8 | 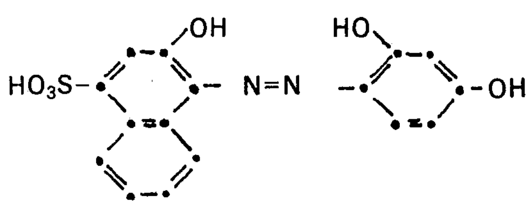 | 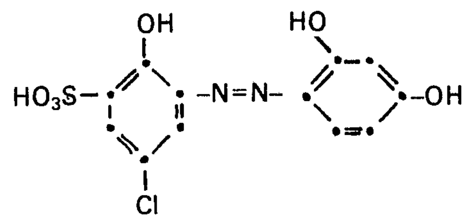 | 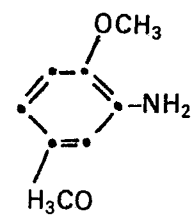 | 2 | violettbraun |
| 9 | 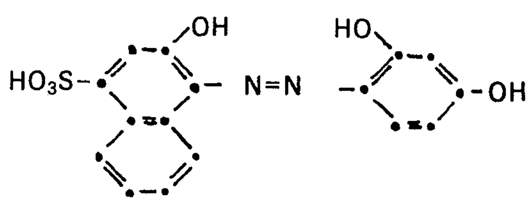 | 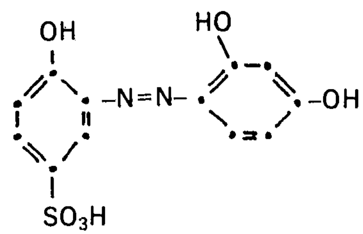 | 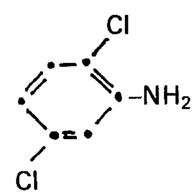 | 2 | braunviolett |

| Nr. | I<br>Monoazofarbstoff 1 | II<br>Monoazofarbstoff 2 | III<br>Diazo-komponente | IV<br>Mol Diazokom-ponente | V<br>Nuance |
|---|---|---|---|---|---|
| 10 | 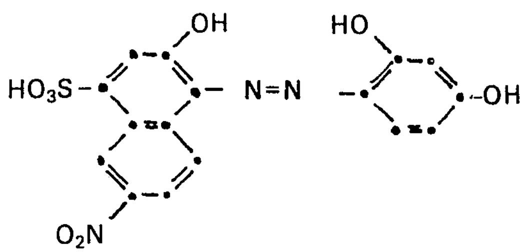 | 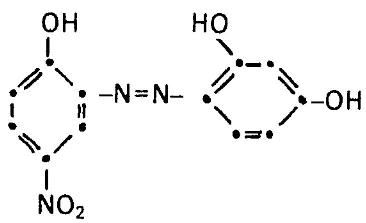 | 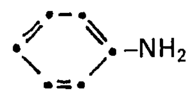 | 2 | dunkelbraun |
| 11 | 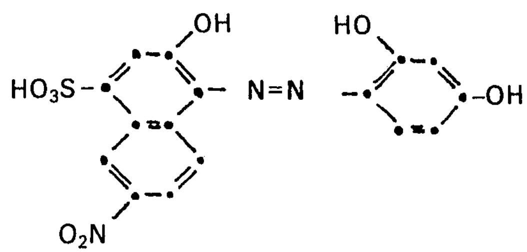 | 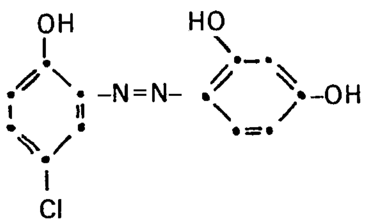 | 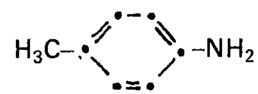 | 2 | braunviolett |
| 12 | 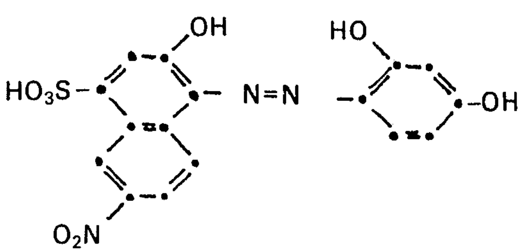 | 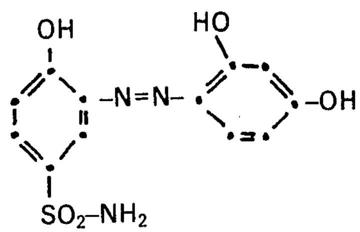 | 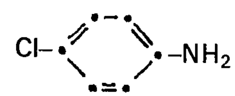 | 2 | dunkelbraun |

| Nr. | I<br>Monoazofarbstoff 1 | II<br>Monoazofarbstoff 2 | III<br>Diazo-komponente | IV<br>Mol Diazokom-ponente | V<br>Nuance |
|---|---|---|---|---|---|
| 13 | 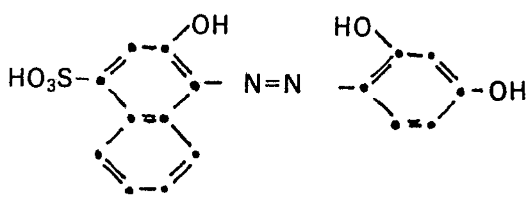 | 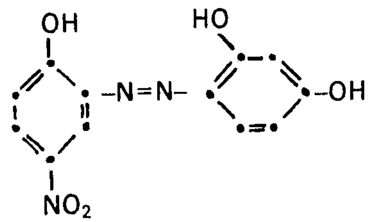 | 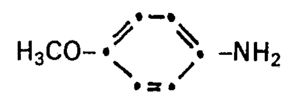 | 2 | violettbraun |
| 14 | 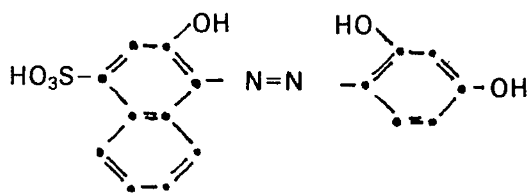 | 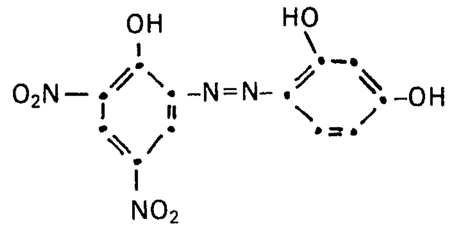 | 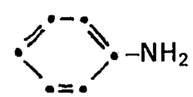 | 2 | braun |
| 15 | 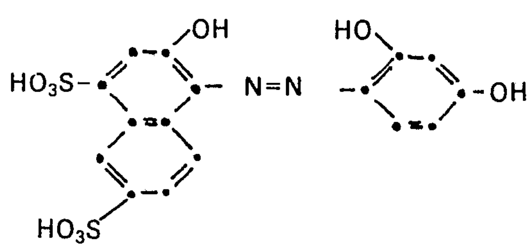 | 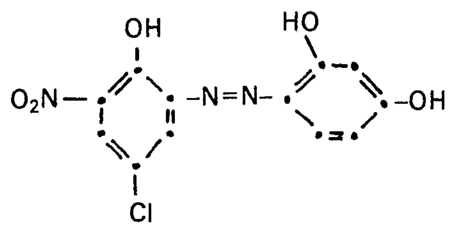 | 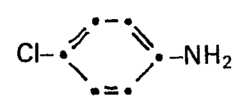 | 2 | dunkelbraun |

| Nr. | I<br>Monoazofarbstoff 1 | II<br>Monoazofarbstoff 2 | III<br>Diazo-<br>komponente | IV<br>Mol<br>Diazokom-<br>ponente | V<br>Nuance |
|---|---|---|---|---|---|
| 16 | 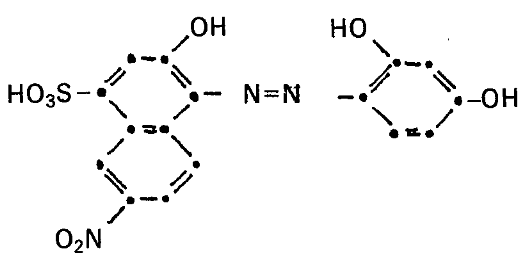 | 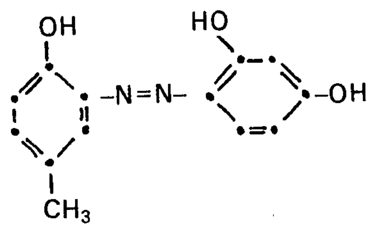 | 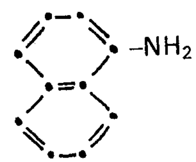 | 1 | dunkelbraun |
| 17 | 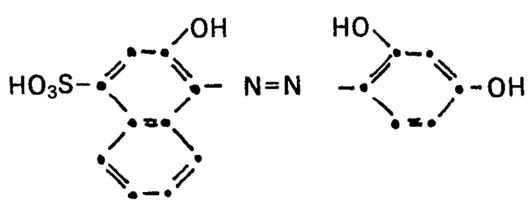 | 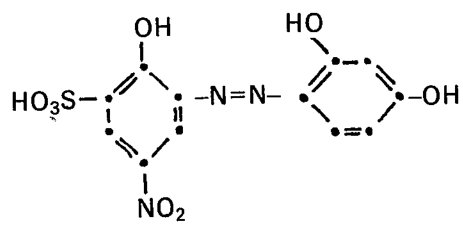 | 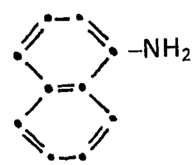 | 1 | violettbraun |

Beispiel 3

20,25 Teile des nach bekanntem Verfahren erhältlichen Monoazofarbstoffs aus 1-Diazo -2-hydroxy -6- nitronaphthalin -4- sulfonsäure und 1,3-Dihydroxybenzol sowie 17,75 Teile des in üblicher Weise zugänglichen Monoazofarbstoffs aus diazotierter 4-Nitro -2- aminophenol -6- sulfonsäure und 1,3-Dihydroxybenzol werden zusammen in 500 Teilen Wasser von 70° suspendiert und mit 2-normaler Natriumhydroxidlösung auf pH 7,5–8,0 gestellt. Nach Zugabe von 125 Teilen einer 3,07 Gew.-% $Cr_2O_3$ enthaltenden Lösung von Natrium-disalicylatochromiat-III wird das Reaktionsgemisch zum Sieden erhitzt und so lange unter Rückfluss gerührt, bis keine metallfreien Ausgangsfarbstoffe mehr nachweisbar sind. Die klare braune Reaktionslösung enthält ein Gemisch der beiden symmetrischen 1:2-Komplexe mit dem einheitlich-asymmetrischen Chromkomplex der beiden Ausgangsfarbstoffe.

Nach Kühlen auf 10–15° wird eine aus 10,7 Teilen 4-Methyl -1- aminobenzol nach bekanntem Verfahren hergestellte Lösung des Diazoniumchlorids zugetropft und dabei gleichzeitig ein pH-Bereich von 8–9 eingehalten. Der nach vollständiger Kupplung durch Eindampfen der Reaktionslösung erhaltene neue Farbstoff ergibt auf Chromleder und nachgegerbtem Leder volle, violettstichige Brauntöne.

Wird die Metallisierung des Gemisches aus beiden Ausgangsfarbstoffen mit 14,1 Teilen Kobalt-II-sulfat-heptahydrat bei 70–80°C und pH 8–8,5 vorgenommen und im übrigen wie zuvor verfahren, so entsteht ein koloristisch ähnlicher, rötlichbrauner Mischkomplexfarbstoff.

In der nachfolgenden Tabelle sind weitere Farbstoffe enthalten, die nach dem Verfahren des Beispiels 3 zugänglich sind. Dabei gibt Kolonne I den ersten, Kolonne II den zweiten Monoazofarbstoff und Kolonne III das Molverhältnis dieser beiden Ausgangsprodukte an. Kolonne IV enthält das zur 1:2-Komplexbildung verwendete Metall, Kolonne V die Diazokomponente, Kolonne VI das Molverhältnis Diazokomponente zu Gesamteinsatz an Resorcin-Monoazofarbstoffen und Kolonne VII die auf Leder erzielbaren Farbtöne.

| Nr. | I<br>Monoazo-farbstoff I | II<br>Monoazo-farbstoff II | III<br>Mol I:II | IV<br>Metall | V<br>Diazokom-ponente | VI<br>Mol Diazo-komponente | VII<br>Nuance |
|---|---|---|---|---|---|---|---|
| 1 | 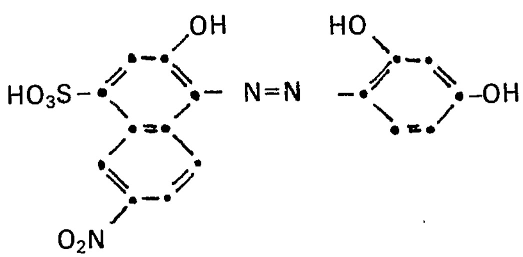 | 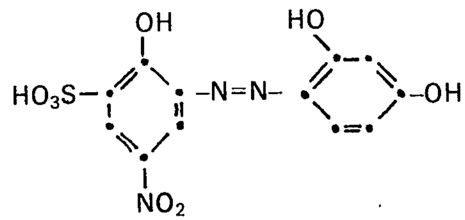 | 1:1 | Cr | 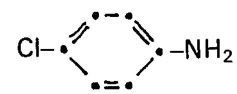 | 2 | dunkel-braun |
| 2 | 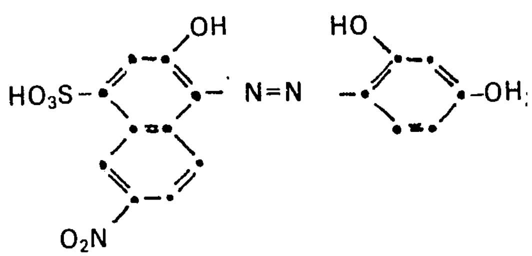 | 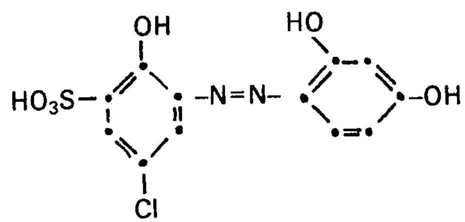 | 2:1 | Co | 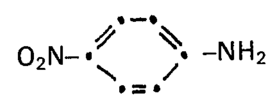 | 2 | violett-braun |
| 3 | 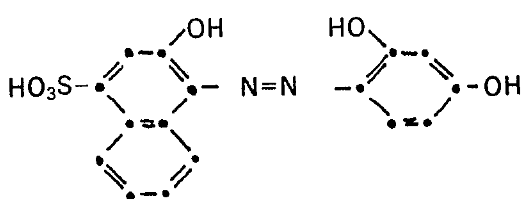 | 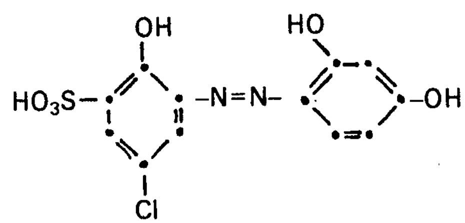 | 1:1 | Cr | 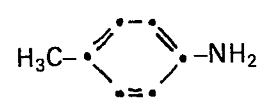 | 2 | braun-violett |

| Nr. | I<br>Monoazo-farbstoff I | II<br>Monoazo-farbstoff II | III<br>Mol I:II | IV<br>Metall | V<br>Diazokom-ponente | VI<br>Mol Diazo-komponente | VII<br>Nuance |
|---|---|---|---|---|---|---|---|
| 4 | 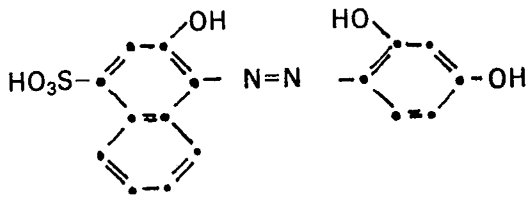 | 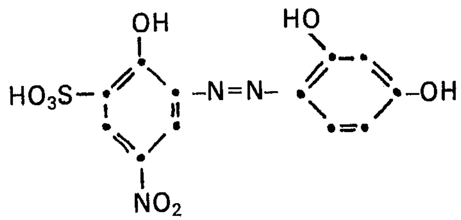 | 1:1 | Co | 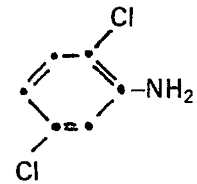 | 2 | dunkel-braun |
| 5 | 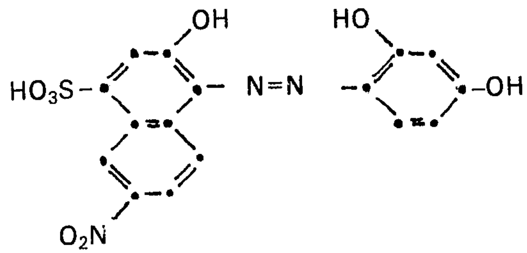 | 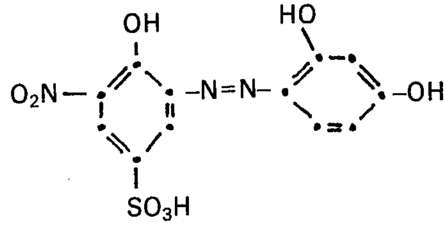 | 2:1 | Cr | 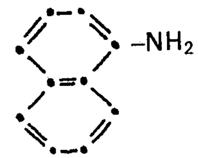 | 2 | dunkel-braun |
| 6 | 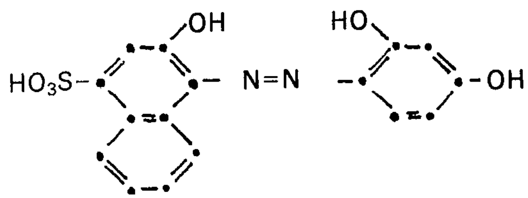 | 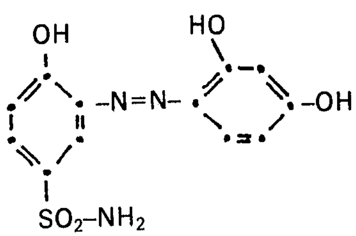 | 1:1 | Co | 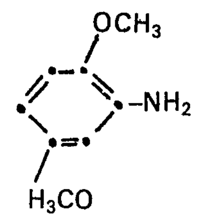 | 2 | braun-violett |
| 7 | 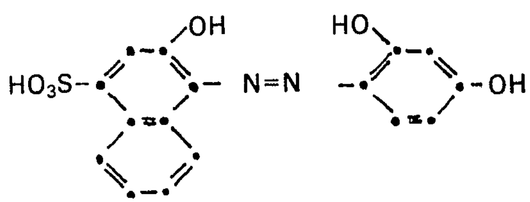 | 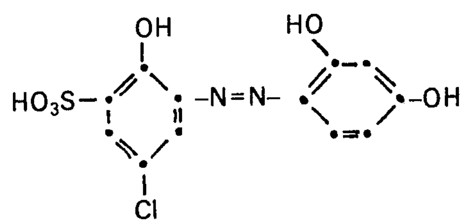 | 2:1 | Co | 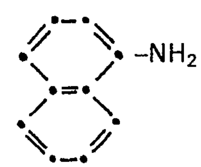 | 2 | violett |

Beispiel 4

40,5 Teile des nach bekanntem Verfahren erhältlichen Monoazofarbstoffs auf 1-Diazo -2-hydroxy -6- nitronaphthalin -4- sulfonsäure und 1,3-Dihydroxybenzol werden gemäss Beispiel 1 in den entsprechenden 1:2-Chromkomplex übergeführt.

Die erhaltene klare Lösung des 1:2-Chromkomplexes wird auf 10 bis 15° gekühlt und langsam mit einer aus 6,3 Teilen 4-Chlor -1- aminobenzol und 6,9 Teilen 4-Nitro -1- aminobenzol simultan bereiteten Lösung der Diazoniumverbindungen versetzt, wobei durch gleichzeitiges Zutropfen einer 2-normalen Natriumhydroxidlösung ein pH-Bereich von 8 bis 9 eingehalten wird.

Der neue Metallkomplexfarbstoff von folgender Konstitution

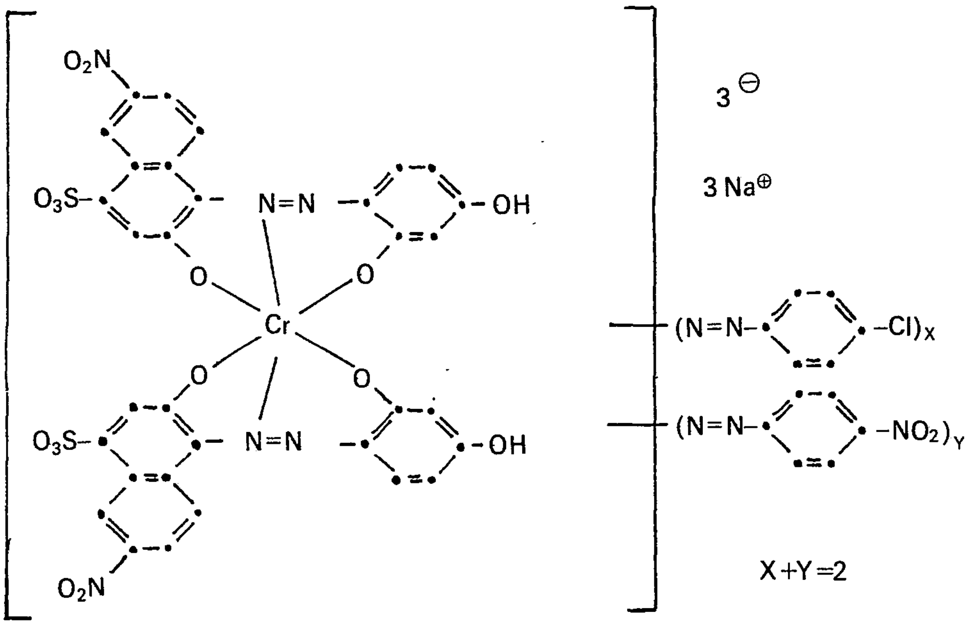

X+Y=2

wird wie im Beispiel 1 aufgearbeitet. Er liefert auf Chromleder und nachgegerbtem Leder volle, echte Braunschwarzfärbungen.

Beispiel 5

Aus den beiden Monoazofarbstoffen aus 1-Diazo -2- hydroxy -6- nitronaphthalin -4- sulfonsäure bzw. 1-Diazo -2- hydroxynaphthalin-4-sulfonsäure und 1,3-Dihydroxybenzol wird nach den Angaben des Beispiels 2 der einheitliche, asymmetrische 1:2-Chromkomplex hergestellt. Die Kupplung mit dem Gemisch der in üblicher Weise bereiteten Diazoniumverbindungen aus 12,75 Teilen 4-Chlor -1- aminobenzol und 22,3-Teilen 1-Aminonaphthalin ergibt eine statistische Mischung von Komplexfarbstoffen.

Die Aufarbeitung gemäss Beispiel 1 ergibt einen gut wasserlöslichen Farbstoff, mit welchem auf Leder verschiedener Qualität echte Schwarznuancen erzielt werden.

Färbevorschrift für Leder

100 Teile Bekleidungsveloursleder (Trockengewicht) werden bei 50° in einer Lösung von 1000 Volumenteilen Wasser und 2 Teilen Ammoniak 24%ig während 2 Stunden aufgewalkt und anschliessend bei 60° in einer Lösung von 1000 Volumenteilen Wasser, 2 Teilen Ammoniak 24%ig und 6 Teilen Farbstoff aus Beispiel 1 während einer Stunde gefärbt. Hierauf gibt man eine Lösung von 40 Volumenteilen Wasser und 4 Teilen Ameisensäure 85%ig zu und färbt noch weitere 30 Minuten. Dann werden die Leder gut gespült und gegebenenfalls noch mit 2 Teilen eines Dicyandiamidformaldehydkondensationsproduktes während 30 Minuten bei 50° behandelt.

In gleicher Weise lassen sich andere Velourslèder sowie Handschuhleder färben.

Die so erhaltenen schwarzen Färbungen zeichnen sich durch allgemein gute Echtheiten und sehr gutes Deckvermögen aus.

## Patentansprüche

1. Metallkomplexfarbstoffe der Formel I

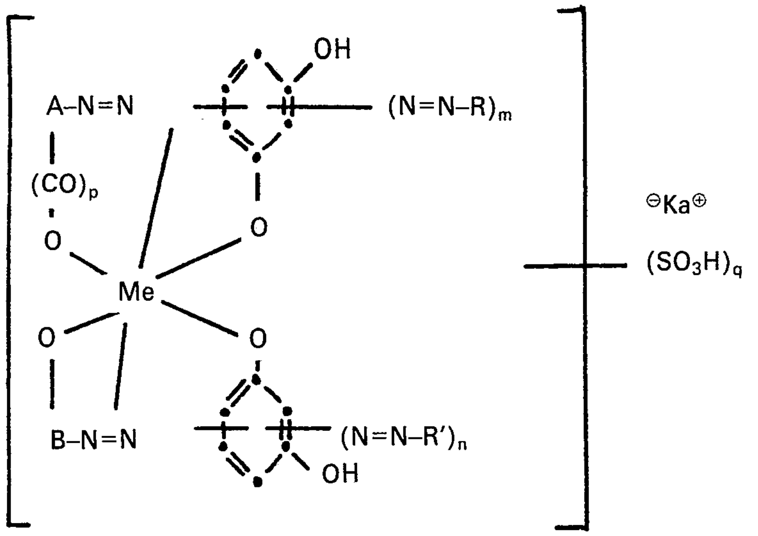

(I)

worin

Me Kobalt oder Chrom

A den Rest einer Diazokomponente der Benzol- oder Naphthalinreihe, welcher die Hydroxy- oder Carboxygruppe in o-Stellung zur Azogruppe trägt,

B den Rest eines o-Aminonaphthols,

R und R' unabhängig voneinander je einen Benzol- oder Naphthalinrest, der noch weitere Substituenten, jedoch keine Arylaminoreste, keine Sulfogruppen und keine metallisierbaren Gruppen in o-Stellung zur Azogruppe tragen kann,

Ka ein Kation, p 0 oder 1,

m und n unabhängig voneinander je eine Zahl von 0 bis 1, wobei die Summe von n + m eine Zahl von 1 bis 2 ergibt, und

q eine ganze Zahl von 1 bis 6 bedeutet.

2. Metallkomplexfarbstoffe gemäss Anspruch 1, worin B der Rest von 1-Amino -2- hydroxynaphthalin -4- sulfosäure, 1-Amino -2- hydroxy-6- nitronaphthalin -4- sulfosäure, 1-Amino-2- hydroxy -6- chlornaphthalin -4- sulfosäure, 1-Amino -2- hydroxynaphthalin-4,6-disulfosäure oder 1-Hydroxy -2- aminonaphthalin-4- sulfosäure ist.

3. Metallkomplexfarbstoffe gemäss Anspruch 1 oder 2, worin A der Rest eines 1-Hydroxy -2- aminobenzols ist, welcher gegebenenfalls ein oder mehrmals durch Halogen, Nitro, Sulfo, Alkyl oder Alkoxy substituiert ist oder der Rest von 1-Amino -2- hydroxynaphthalin -4- sulfosäure, 1-Amino -2- hydroxy -6- nitronaphthalin -4- sulfosäure, 1-Amino -2- hydroxy -6- chlornaphthalin -4- sulfosäure, 1-Amino -2- hydroxynaphthalin-4,6-disulfosäure oder 1-Hydroxy -2- aminonaphthalin -4- sulfosäure.

4. Metallkomplexfarbstoffe gemäss einem der Ansprüche 1–3, worin R und R' unabhängig voneinander je ein gegebenenfalls mit Chlor, Brom, Nitro, Sulfamid, N-mono- oder N,N-dialkyliertem Sulfamid, Alkylsulfonyl, Alkyl oder Alkoxy substituierter Phenyl- oder ein Naphthylrest ist.

5. Metallkomplexfarbstoffe der Formel II

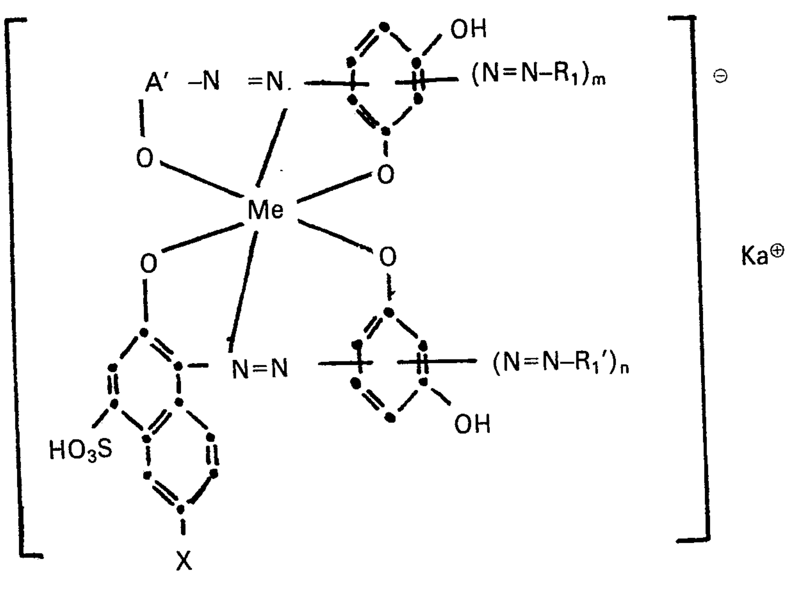

(II)

worin

A' den Rest einer Diazokomponente der Benzol- oder Naphthalinreihe, welcher die Hydroxygruppe in o-Stellung zur Azogruppe trägt,

$R_1$ und $R_1'$ unabhängig voneinander je einen gegebenenfalls mit Chlor, Brom, Nitro, Sulfamid, N-mono- oder N,N-dialkyliertem Sulfamid, Alkylsulfonyl, Alkyl oder Alkoxy substituierten Phenylrest oder einen Naphthylrest,

X Wasserstoff, Nitro, Chlor oder Sulfo,

m und n unabhängig voneinander je 1 oder 2,

Me Kobalt oder Chrom und

$Ka^{\oplus}$ ein Kation bedeutet, wobei die Farbstoffe insgesamt 2 bis 6 Sulfogruppen aufweisen.

6. Metallkomplexfarbstoffe der Formel III

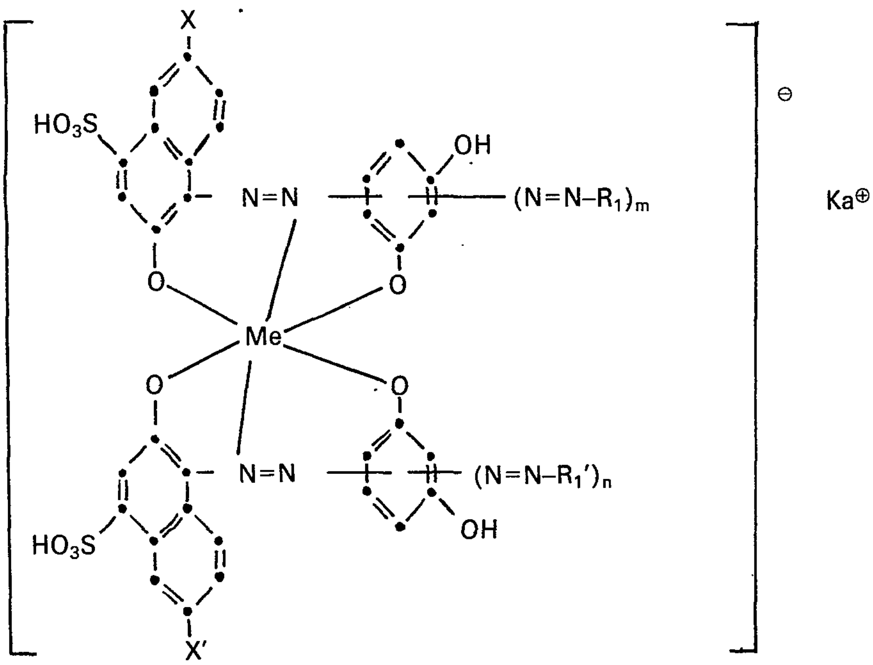

(III)

worin

$R_1$ und $R_1'$ unabhängig voneinander je einen gegebenenfalls mit Chlor, Brom, Nitro, Sulfamid, N-mono- oder N,N-dialkyliertem Sulfamid, Alkylsulfonyl, Alkyl oder Alkoxy substituierten Phenylrest oder einen Naphthylrest,

X und X' unabhängig voneinander Wasserstoff, Nitro, Chlor oder Sulfo,

m und n unabhängig voneinander je 1 oder 2,

Me Kobalt oder Chrom und

$Ka^{\oplus}$ ein Kation bedeutet, wobei die Farbstoffe insgesamt 2 bis 4 Sulfogruppen aufweisen.

7. Metallkomplexfarbstoffe gemäss Anspruch 6, bei denen Me Chrom bedeutet.

8. Metallkomplexfarbstoffe gemäss Ansprüchen 6 oder 7, worin $R_1$ und $R'_1$ je einen gegebenenfalls ein- oder zweimal durch Chlor, $C_1$–$C_4$-Alkyl oder $C_1$–$C_4$-Alkoxy substituierten Phenylrest oder einen Naphthylrest darstellen.

9. Verfahren zur Herstellung von Metallkomplexfarbstoffen der Formel I, dadurch gekennzeichnet, dass man einen Farbstoff der Formel IV

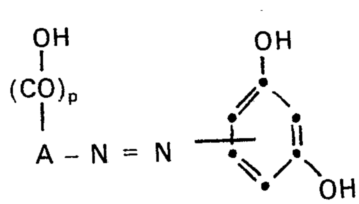

(IV)

und einen Farbstoff der Formel V

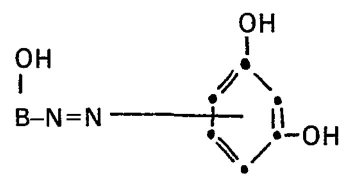

wobei die Farbstoffe IV und V identisch sein können, mit einem kobalt- oder chromabgebenden Mittel zum 1:2 Metallkomplex umsetzt, wobei man entweder vorgängig den Farbstoff der Formel IV und/oder den Farbstoff der Formel V oder anschliessend den gebildeten 1:2-Komplex mit einer Diazoniumverbindung der Formel VI

$$Y^{\ominus} N \equiv N^{\oplus} - R \text{ bzw. } Y^{\ominus} N \equiv N^{\oplus} - R' \qquad (VI)$$

kuppelt, wobei A, B, R, R' und p die unter der Formel I angegebene Bedeutung aufweisen und $Y^{\ominus}$ ein Anion ist.

10. Verfahren gemäss Anspruch 9, dadurch gekennzeichnet, dass man den 1:1-Chromkomplex eines Farbstoffes der Formel IV oder eines Farbstoffes der Formel V herstellt, diesen dann mit einem nicht metallisierten Farbstoff der Formel V bzw. IV zum asymmetrischen 1:2-Chromkomplex umsetzt, wobei man entweder vorgängig den Farbstoff der Formel IV oder V oder den 1:1-Komplex eines dieser Farbstoffe mit ca. einem oder zwei Mol oder anschliessend den gebildeten 1:2-Komplex mit einer Diazoniumverbindung der Formel VI kuppelt.

11. Verfahren gemäss Anspruch 9 oder 10, dadurch gekennzeichnet, dass man zunächst den 1:2 Metallkomplex der Farbstoffe IV und/oder V herstellt und diesen dann mit der Diazoniumverbindung der Formel VI kuppelt.

12. Verfahren zum Färben von Stickstoff- und Hydroxygruppen enthaltenden Materialien, insbesondere von Wolle oder Polyamid und vor allem Leder, unter Verwendung der gemäss den Ansprüchen 1 bis 8 definierten bzw. gemäss den Ansprüchen 9 bis 11 erhaltenen Metallkomplexfarbstoffe.

**Revendications**

1. Colorants à complexe métallifère de formule I

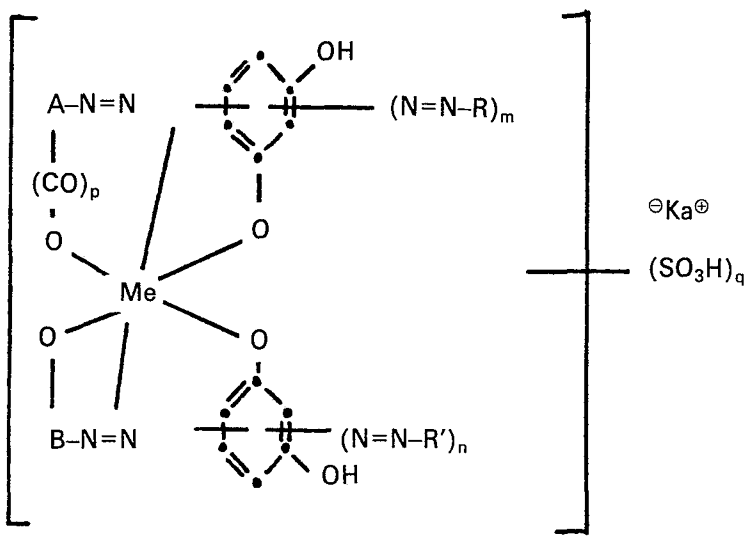

(I)

dans laquelle

Me représente le cobalt ou le chrome;

A représente le reste d'un composant diazoïque de la série du benzène ou de celle du naphtalène, qui porte le groupe hydroxyle ou carboxyle en position ortho par rapport au groupement azoïque;

B représente le reste d'un o-aminonaphtol;

R et R' représentent chacun, indépendamment l'un de l'autre, un radical benzène ou naphtalène qui peut encore porter d'autres substituants, mais pas de groupes arylamino, pas de groupes sulfo, ni de groupes métallables en position ortho par rapport au groupement azoïque;

Ka représente un cation;

p est 0 ou 1;

m et n représentent chacun, indépendamment l'un de l'autre, un nombre allant de 0 à 1, la somme de n + m donnant un nombre allant de 1 à 2; et

q représente un nombre entier allant de 1 à 6.

2. Colorants à complexe métallifère selon la revendication 1, dans lesquels B est le reste de l'acide 1-amino -2- hydroxynaphtalène -4- sulfonique, de l'acide 1-amino -2- hydroxy -6- nitronaphtalène -4- sulfonique, de l'acide 1-amino-2-hydroxy -6- chloronaphtalène -4- sulfonique, de l'acide 1-amino -2- hydroxynaphtalène-4,6-disulfonique ou de l'acide 1-hydroxy -2- aminonaphtalène -4- sulfonique.

3. Colorants à complexe métallifère selon la revendication 1 ou 2, dans lesquels A est le reste d'un 1-hydroxy -2- aminobenzène qui est éventuellement substitué une ou plusieurs fois par un groupe halogéno, nitro, sulfo, alkyle ou alcoxy, ou le reste de l'acide 1-amino -2- hydroxynaphtalène -4- sulfonique, de l'acide 1-amino -2- hydroxy-6- nitronaphtalène -4- sulfonique de l'acide 1-amino -2- hydroxy -6- chloro-naphtalène -4- sulfonique, de l'acide 1-amino -2- hydroxynaphtalène-4,6-disulfonique ou de l'acide 1-hydroxy-2- aminonaphtalène -4- sulfonique.

4. Colorants à complexe métallifère selon l'une des revendications 1 à 3, dans lesquels R et R' sont chacun, indépendamment l'un de l'autre, un radical phényle ou un radical naphtyle éventuellement substitué par un groupe chloro, bromo, nitro, sulfamido, sulfamido N-mono- ou N,N-dialkylé, alkylsulfonyle, alkyle ou alcoxy.

5. Colorants à complexe métallifère de formule II

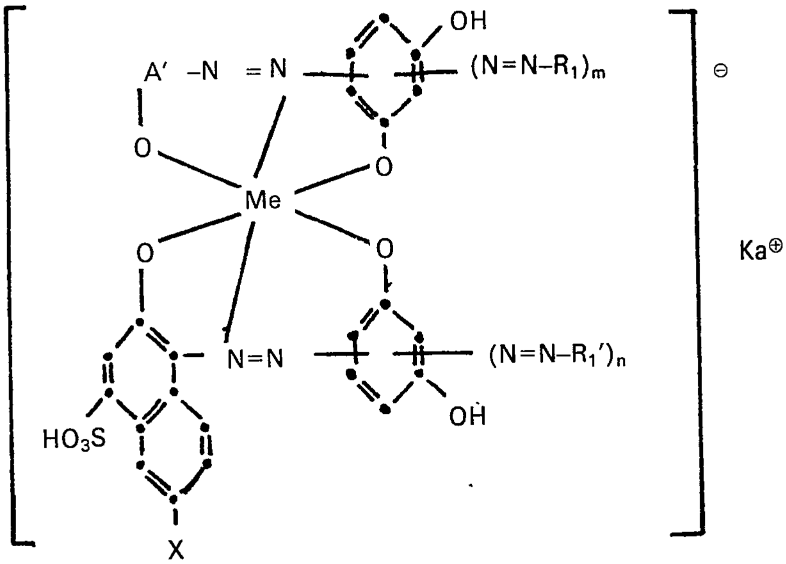

(II)

dans laquelle

A' représente le reste d'un composant diazoïque de la série du benzène ou de celle du naphtalène qui porte le groupe hydroxyle en position ortho par rapport au groupement azoïque;

$R_1$ et $R_1'$ représentent chacun, indépendamment l'un de l'autre, un radical phényle ou un radical naphtyle éventuellement substitué par un groupe chloro, bromo, nitro, sulfamido, sulfamido N-mono- ou N,N-dialkylé, alkylsulfonyle, alkyle ou alcoxy;

X représente un atome d'hydrogène, un groupe nitro, chloro ou sulfo;

m et n sont chacun, indépendamment l'un de l'autre, 1 ou 2;

Me représente le cobalt ou le chrome; et

$Ka^{\oplus}$ représente un cation, les colorants comportant au total de 2 à 6 groupes sulfo.

6. Colorants à complexe métallifère de formule III

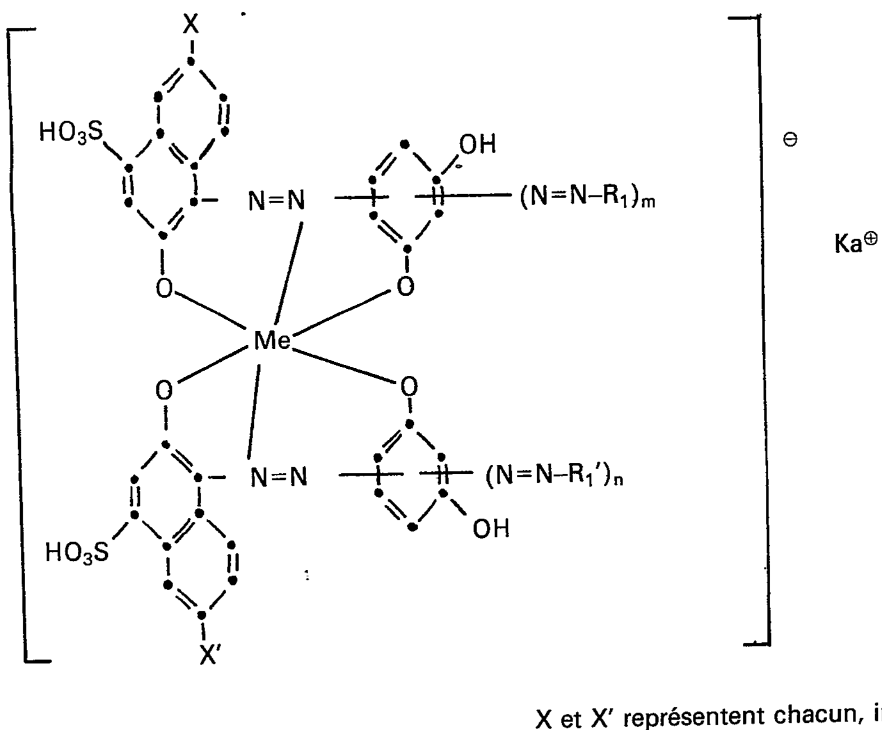

(III)

dans laquelle

$R_1$ et $R_1'$ représentent chacun, indépendamment l'un de l'autre, un radical phényle ou un radical naphtyle éventuellement substitué par un groupe chloro, bromo, nitro, sulfamido, sulfamido N-mono- ou N,N-dialkylé, alkylsulfonyle, alkyle ou alcoxy;

X et X' représentent chacun, indépendamment l'un de l'autre, un atome d'hydrogène, un groupe nitro, chloro ou sulfo;

m et n sont chacun, indépendamment l'un de l'autre, 1 ou 2;

Me représente le cobalt ou le chrome; et

$Ka^{\oplus}$ représente un cation, les colorants comportant au total de 2 à 4 groupes sulfo.

7. Colorants à complexe métallifère selon la revendication 6, dans lesquels Me représente le chrome.

8. Colorants à complexe métallifère selon les revendications 6 ou 7, dans lesquels $R_1$ et $R_1'$ représentent chacun un radical phényle ou un radical naphtyle éventuellement substitué une ou deux fois par un groupe chloro, alkyle en $C_1$–$C_4$ ou alcoxy en $C_1$–$C_4$.

9. Procédé pour la préparation de colorants à complexe métallifère de formule I, caractérisé par le fait que l'on fait réagir un colorant de formule IV

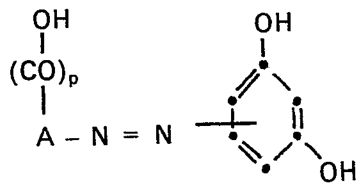

(IV)

et un colorant de formule V

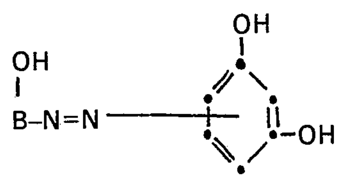

(V)

les colorants IV et V pouvant être identiques, avec un agent donneur de cobalt ou de chrome pour aboutir au complexe métallifère 1:2, en faisant copuler, soit en premier lieu le colorant de formule IV et/ou le colorant de formule V, soit ultérieurement le complexe 1:2 formé, avec un composé de type diazonium de formule VI

$$Y^{\ominus}N\equiv N^{\oplus}\text{–}R \text{ ou } Y^{\ominus}N\equiv N^{\oplus}\text{–}R' \qquad \text{(VI)}$$

A, B, R, R' et p ayant les significations données pour la formule I, et $Y^{\ominus}$ étant un anion.

10. Procédé selon la revendication 9, caractérisé par le fait que l'on prépare le complexe de chrome 1:1 d'un colorant de formule IV ou d'un colorant de formule V, puis on le fait réagir avec un colorant non métallé de formule V ou IV respectivement pour aboutir au complexe de chrome asymétrique 1:2, en faisant copuler, soit en premier lieu le colorant de formule IV ou V ou le complexe 1:1 d'un de ces colorants, soit ultérieurement le complexe 1:2 formé, avec environ 1 ou 2 moles d'un composé de type diazonium de formule VI.

11. Procédé selon la revendication 9 ou 10, caractérisé par le fait que l'on prépare d'abord le complexe métallifère 1:2 des colorants IV et/ou V, et que l'on fait ensuite copuler celui-ci avec le composé de type diazonium de formule VI.

12. Procédé pour la teinture de matériaux contenant des groupes azotés et hydroxyle, en particulier de la laine ou du polyamide et surtout du cuir, par utilisation des colorants à complexe métallifère définis selon les revendications 1 à 8 ou obtenus selon les revendications 9 à 11.

## Claims

1. A metal complex dye of the formula I

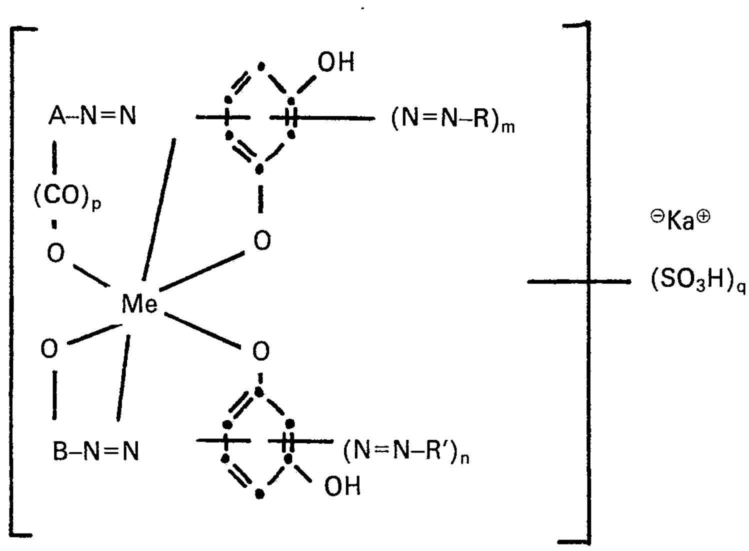

(I),

in which

Me is cobalt or chromium,

A is the radical of a diazo component of the benzene or naphthalene series, which radical carries the hydroxyl or carboxyl group in o-position relative to the azo group,

B is the radical of an o-aminonaphthol, each of

R and R' independently of the other is a benzene or naphthalene radical which can carry further substituents, but no arylamino radicals, no sulfo groups and no metallisable groups, in o-position relative to the azo group,

Ka is a cation, p is 0 or 1, each of

m and n independently of the other is a number from 0 to 1 such that the total of n and m is a number from 1 to 2, and

q is an integer from 1 to 6.

2. A metal complex dye as claimed in claim 1, in which B is the radical of 1-amino -2- hydroxynaphthalene -4- sulfonic acid, 1-amino -2- hydroxy -6- nitronaphthalene -4- sulfonic acid, 1-amino -2- hydroxy -6- chloronaphthalene -4-sulfonic acid, 1-amino -2- hydroxynaphthalene-4,6-disulfonic acid or 1-hydroxy -2- aminonaphthalene -4- sulfonic acid.

3. A metal complex dye as claimed in either of claims 1 or 2, in which A is the radical of a 1-hydroxy -2- aminobenzene, which radical is unsubstituted or monosubstituted or polysubstituted by halogen, nitro, sulfo, alkyl or alkoxy, or is the radical of 1-amino -2- hydroxynaphthalene -4- sulfonic acid, 1-amino -2- hydroxy -6- nitronaphthalene -4- sulfonic acid, 1-amino -2- hydroxy-6- chloronaphthalene -4- sulfonic acid, 1-amino-2- hydroxynaphthalene-4,6-disulfonic acid or 1-hydroxy -2- aminonaphthalene -4- sulfonic acid.

4. A metal complex dye as claimed in any one of claims 1 to 3, in which each of R and R' independently of the other is a phenyl radical which is unsubstituted or substituted by chlorine, bromine, nitro, sulfamide, N-monoalkylated or N,N-dialkylated sulfamide, alkylsulfonyl, alkyl or alkoxy, or is a naphthyl radical.

5. A metal complex dye of the formula II

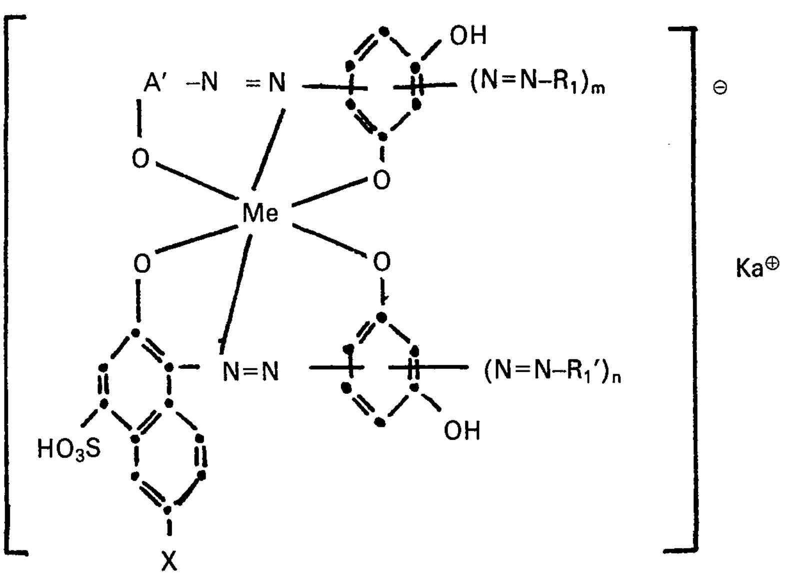

(II)

in which

A' is the radical of a diazo component of the benzene or naphthalene series, which radical carries the hydroxyl group in o-position relative to the azo group, each of

$R_1$ and $R_1'$ independently of the other is a phenyl radical which is unsubstituted or substituted by chlorine, bromine, nitro, sulfamide, N-monoalkylated or N,N-dialkylated sulfamide, alkylsulfonyl, alkyl or alkoxy, or is a naphthyl radical,

X is hydrogen, nitro, chlorine or sulfo, each of

m and n independently of the other is 1 or 2,

Me is cobalt or chromium and $Ka^{\oplus}$ is a cation, and the dyes have a total of 2 to 6 sulfo groups.

6. A metal complex dye of the formula III

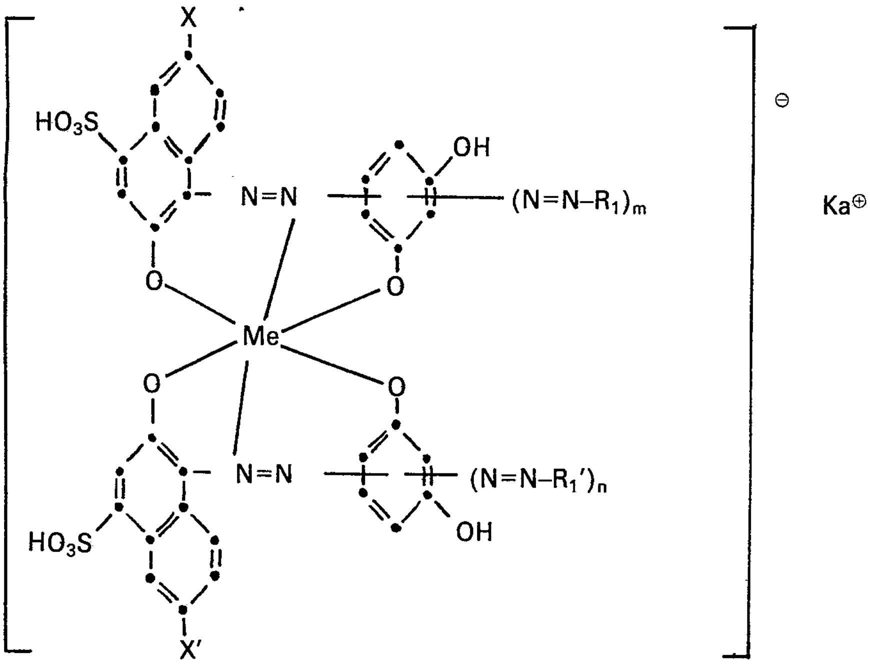

(III)

in which each of

$R_1$ and $R_1'$ independently of the other is a phenyl radical which is unsubstituted or substituted by chlorine, bromine, nitro, sulfamide, N-monoalkylated or N,N-dialkylated sulfamide, alkylsulfonyl, alkyl or alkoxy, or is a naphthyl radical, each of

X and X' independently of the other is hydrogen, nitro, chlorine or sulfo, each of

m and n independently of the other is 1 or 2,

Me is cobalt or chromium and

$Ka^{\oplus}$ is a cation, and the dyes have a total of 2 to 4 sulfo groups.

7. A metal complex dye as claimed in claim 6, in which Me is chromium.

8. A metal complex dye as claimed in either of claims 6 or 7, in which each of $R_1$ and $R_1'$ is a phenyl radical which is unsubstituted or monosubstituted or disubstituted by chlorine, $C_1$–$C_4$alkyl or $C_1$–$C_4$alkoxy, or is a naphthyl radical.

9. A process for the preparation of a metal complex dye of the formula I, which process comprises reacting a dye of the formula IV

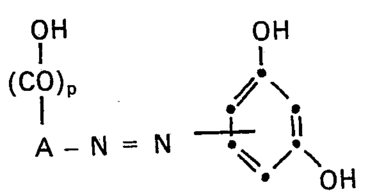

(IV)

and a dye of the formula V

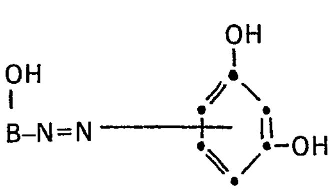

(V)

which two dyes IV and V can be identical, with a cobalt- or chromium-donating agent to give a 1:2 metal complex, in which process either the dye of the formula IV and/or the dye of the formula V has been coupled beforehand with a diazonium compound of the formula VI

$Y^{\ominus}N\equiv N^{\oplus}-R$ or $Y^{\ominus}N\equiv N^{\oplus}-R'$ (VI)

in which A, B, R, R' and p are as defined under the formula I, and $Y^{\ominus}$ is an anion, or the 1:2 complex formed is coupled subsequently with such a diazonium compound.

10. A process as claimed in claim 9, wherein the 1:1 chromium complex of a dye of the formula IV or of a dye of the formula V is prepared, this complex is then reacted with a non-metallised dye of the formula V or IV to give the asymmetrical 1:2 chromium complex, in which process either the dye of the formula IV or V or the 1:1 complex of one of these dyes has been coupled beforehand with about one or two moles of a diazonium compound of the formula VI, or the 1:2 complex formed is subsequently coupled with such a diazonium compound.

11. A process as claimed in either of claims 9 or 10, wherein the 1:2 metal complex of the dyes IV and/or V is prepared first and then coupled with the diazonium compound of the formula VI.

12. A process for dyeing nitrogen- and hydroxyl-containing materials, in particular wool or polyamide and especially leather, comprising the use of a metal complex dye as defined in claims 1 to 8 or obtained by the process claimed in any one of claims 9 to 11.